# EUROPEAN PATENT APPLICATION

(11) **EP 4 650 609 A1**
(43) Date of publication of application: **19.11.2025**
(21) Application number: 25176449.4
(22) Date of filing: 14.05.2025
(51) Int. Cl.: F16B 2/00, F16B 12/20, F16B 12/46

(54) **CONNECTOR FOR MECHANICALLY CONNECTING A FIRST WORKPIECE AND A SECOND WORKPIECE, ASSEMBLY, AND METHOD FOR OPERATING A CONNECTOR**

(30) Priority: 15.05.2024 EP 24176058
(71) Applicant: Festool GmbH, 73240 Wendlingen am Neckar (DE)
(72) Inventor: BÄCHLE, Leon, 73240 Wendlingen (DE); MESSER, David, 73240 Wendlingen (DE)
(74) Representative: Maiwald GmbH

(57) **Abstract**

A connector (56) for mechanically connecting a first workpiece and a second workpiece is described. The connector (56) is plate-shaped or flat bar-shaped and comprises a first engagement element (78) for engaging a first undercut of a first coupling groove and a second engagement element (80) for engaging a second undercut of a second coupling groove. Moreover, the connector 56 comprises an actuation body (86) for selectively bringing the connector (56) in a connection state in which the first engagement element (78) is positioned to engage the first undercut and the second engagement element (80) is positioned to engage the second undercut, and for selectively bringing the connector (56) in a release state in which the first engagement element (78) is configured to be withdrawn from the first undercut and the second engagement element (80) is configured to be withdrawn from the second undercut. An actuation interface (94) is provided on the actuation body (86). The actuation interface (94) is arranged eccentrically along an insertion direction (D). Moreover, an assembly is presented, the assembly comprising the first workpiece, the second workpiece and the connector (56). Additionally, a method for operating a connector (56) is explained.

## Description

The invention relates to a connector for mechanically connecting a first workpiece and a second workpiece. The first workpiece comprises at least one first coupling groove comprising a first undercut effective along a groove depth direction, and the second workpiece comprises at least one second coupling groove comprising a second undercut effective along a groove depth direction.

The invention is further directed to an assembly. The assembly comprises a first workpiece comprising at least one first coupling groove having a groove opening positioned in a first abutment surface of the first workpiece. The first coupling groove comprises a first undercut effective along a groove depth direction. Additionally, the assembly comprises a second workpiece comprising at least one second coupling groove having a groove opening positioned in a second abutment surface of the second workpiece. The second coupling groove comprises a second undercut effective along a groove depth direction. Furthermore, the assembly comprises such a connector.

Moreover, the invention relates to a method for operating a connector.

In this context, a groove depth direction is understood to be a direction that extends between a groove opening and a groove base. A groove opening is usually elongated. Otherwise, it is referred to as a hole or bore. The groove opening is usually arranged opposite the groove base. In the case of a groove that is limited on both sides along its length, the groove opening is the only opening of the groove. In the case of a groove that has one open end or two open ends along its length, only the opening extending along the length of the groove is considered to be the groove opening. The one open end or the two open ends, therefore, do not form a groove opening. The same applies to openings resulting from other design features, e.g. transverse grooves or transverse holes. In this context, a direction parallel to the longer side of the elongated groove opening is to be regarded as the direction of extension or length of the groove.

Accordingly, an undercut effective along a groove depth direction comprises an undercut with respect to a direction extending from the groove base towards the groove opening. This means that an element that engages the undercut cannot be pulled out of the groove along the groove depth direction. This is due to the fact that the element and the undercut form a positive locking.

Such undercuts and associated coupling grooves can be produced with known tools using known methods. The tools can be stationary or hand-guided.

Connectors and assemblies of the type mentioned above are generally known. They are used, for example, to mechanically connect wooden components or workpieces. Such components or workpieces can be furniture parts. However, it is understood that the connector and the assembly as mentioned above are not limited to a specific class of material or a specific field of application. They can also be used to connect components or workpieces made of plastic, metal, ceramic, stone, etc.

In all conceivable applications, the undercuts effective along an associated groove depth direction has the advantage that the workpieces can be connected with a high degree of reliability. A positive connection can be realized by means of the undercuts. This is particularly true in comparison to coupling grooves, which do not have such an undercut.

The problem to be solved by the present invention is to further improve known connectors. The connectors shall in particular be suitable for being used in constrained spaces.

The problem is solved by a connector for mechanically connecting a first workpiece and a second workpiece. The first workpiece comprises at least one first coupling groove comprising a first undercut effective along a groove depth direction, and the second workpiece comprises at least one second coupling groove comprising a second undercut effective along a groove depth direction. The connector is plate-shaped or flat bar-shaped. Moreover, the connector comprises a first engagement element for engaging the first undercut and a second engagement element for engaging the second undercut. Additionally, the connector comprises an actuation body for selectively bringing the connector into a connection state in which the first engagement element is positioned to engage the first undercut and the second engagement element is positioned to engage the second undercut, and for selectively bringing the connector into a release state in which the first engagement element is configured to be withdrawn from the first undercut and the second engagement element is configured to be withdrawn from the second undercut. The first engagement element and the second engagement element are arranged at opposite ends of the connector with respect to an insertion direction of the connector. Furthermore, the first engagement element and the second engagement element are movably coupled to the actuation body. An actuation interface is provided on the actuation body and the actuation interface is arranged eccentrically along the insertion direction. An eccentric arrangement, thus, means that a distance between the actuation interface and a first end of the connector differs from a distance between the actuation interface and a second end of the connector, wherein the first end and the second end are opposite to one another. In this context, the first undercut can be arranged adjacent to a groove base of the first coupling groove. Alternatively or additionally, the second undercut can be arranged adjacent to a groove base of the second coupling groove. Due to its plate-shape or flat bar-shape, the connector is particularly suitable for connecting workpieces via coupling grooves. In a mounted state of the connector, in which the connector is inserted into the first coupling groove of the first workpiece and into the second coupling groove of the second workpiece, a thickness direction of the connector, which corresponds to the smallest spatial dimension of the connector, extends along a groove width direction, i.e. perpendicular to a length of the groove and perpendicular to a groove depth direction. This means that the connector can be used in workpieces that may only provide a comparatively small installation space for the connector. In other words, using the connector, a comparatively compact connection can be realized. The fact that the actuation interface is arranged eccentrically along the insertion direction offers additional degrees of freedom. Since the actuation interface needs to be accessed in order to operate the connector, the connector may be oriented relative to the first workpiece and relative to the second workpiece such that the necessary access to the actuation interface is guaranteed. Especially for connections of the first workpiece and the second workpiece which comprise an asymmetry, the eccentric orientation of the actuation interface may be advantageous in that the accessibility of the actuation interface may be improved with respect to a symmetric connector, i.e. a connector having an actuation interface arranged centrally along the insertion direction. This applies in particular to the use of the connector for connecting plate-shaped workpieces, especially if the plate-shaped workpieces form a corner. In such an application, the thickness direction of the connector extends for example in parallel to the thickness direction of at least one plate-shaped workpiece. In addition, the plate shape or flat bar shape has the advantage that a holding force, which acts between the connector and each of the first and second workpieces, is distributed over a comparatively large section of the first workpiece and the second workpiece. The holding force is introduced into the respective workpiece via a line contact between the connector and the first and/or second workpiece or via a surface contact between the connector and the first and/or second workpiece. This results in comparatively low mechanical stress within the first workpiece and/or the second workpiece. In addition, a linear contact or a surface contact between the connector and the first undercut and/or second undercut can be realized. This leads to a particularly secure and reliable connection of the first workpiece and the second workpiece. The fact that the connector has both a first engagement element and a second engagement element and that a single actuation body is provided for both engagement elements also contributes to this. In this context, the actuation body can both position the engagement elements into the respectively assigned undercuts, i.e. move the engagement elements into the respectively assigned undercuts, and position the engagement elements within the respective assigned undercut, i.e. move the engagement elements inside the respectively assigned undercuts such that they assume a desired position. In this context, the first engagement element may be positioned comparatively close to the actuation interface if the connector is in the connection state. The same may apply to the second engagement element, i.e. the second engagement element may be positioned comparatively close to the actuation interface if the connector is in the connection state. If the connector is in the release state, the first engagement element may be positioned farther away from the actuation interface than in the connection state. The same applies to the second engagement element, i.e. if the connector is in the release state, the second engagement element may be positioned farther away from the actuation interface than in the connection state. In an assembled state, the connector is therefore simultaneously anchored in the first workpiece and in the second workpiece, i.e. the connector engages the first undercut of the first workpiece and the second undercut of the second workpiece. The engagement elements can, therefore, also be referred to as anchoring elements or jaws. On the one hand, such a connector is structurally simple, which favors cost-effective production. On the other hand, such a connector is easy to use, as workpieces can be attached to each other quickly and easily using such a connector.

It should be noted that the effects and advantages explained with reference to the plate shape or flat bar-shape are particularly relevant when compared to connectors shaped as circular cylinders or round bars. This is due to the fact that plate-shaped or flat bar-shaped connectors can be coupled to the workpieces to be connected over comparatively large sections of these. In this context, a predefined thickness of a workpiece means that at least one dimension of the connector cannot be enlarged at will. In the case of a connector shaped as a circular cylinder or a round bar, this is usually the diameter. In the case of plate-shaped or flat bar-shaped connectors, only the associated thickness is limited by the thickness of the workpiece. The other dimensions of the connector can essentially be freely adapted.

Furthermore, it is understood that the first engagement element and the second engagement element must protrude at least in the assembled state, i.e. if the connector is in the connection state, and at least locally with respect to other components of the plate-shaped or flat bar-shaped connector in order to be able to engage the associated undercut. Preferably, the first engagement element and the second engagement element protrude from the other components of the connector along the thickness direction of the connector.

In one variant, the first engagement element and the second engagement element are made of a metal material. This allows the engagement elements to be anchored with particularly high reliability in the associated coupling grooves and, in particular, the undercuts located within the coupling grooves.

According to an example, the actuation interface is configured for coupling with a tool. Consequently, the actuation interface and, thus, the connector, may be actuated using a tool. As compared to a manual actuation of the connector, i.e. an actuation without the use of a tool, this allows a user to apply a higher force and/or a higher torque to the actuation interface and, thus, the first engagement element in order to transfer the first engagement element between a position associated with the connection state and a position associated with the release state. The same applies to the second engagement element, i.e. the second engagement element may be transferred between a position associated with the connection state and a position associated with the release state. Altogether, the connector may be operated with high reliability, i.e. anchored in the first workpiece and/or the second workpiece or released from the first workpiece and/or the second workpiece with high reliability.

According to an example, the actuation interface has a hexagonal shape such that it may interact with a hexagonal key or Allen key. According to another example, the actuation interface is slot-shaped such that it can be operated using a screwdriver or similar tool configured to engage a slot.

According to an embodiment, the first engagement element and the second engagement element have different lengths along the insertion direction. As has been mentioned before, the first engagement element and the second engagement element are arranged at opposite ends of the connector with respect to an insertion direction and the actuation interface provided on the actuation body is arranged eccentrically along the insertion direction. Thus, having a first engagement element and a second engagement element of different lengths offers a structurally simple and reliable configuration for the connector. In other words, the different lengths of the first engagement element and the second engagement element are configured to bridge the difference in distance between the ends of the connector along the insertion direction and the actuation interface.

In an example, the first engagement element travels over a first distance when moving between a position associated with the connection state and a position associated with the release state. The second engagement element travels over a second distance when moving between a position associated with the connection state and a position associated with the release state. The first distance and the second distance are different. Thus, when transferring the connector from a release state into a connection state, the first engagement element travels over a longer distance than the second engagement element or vice versa. The same applies if the connector is transferred from the connection state into the release state. In other words, one of the engagement elements travels over a comparatively large distance, wherein the other one of the engagement elements travels over a comparatively short distance. This facilitates handling of the connector and establishing a connection of the first workpiece and the second workpiece using the connector comprising an actuation interface positioned eccentrically. First of all, this is because the first workpiece and the second workpiece may be provided at a distance with respect to one another when establishing a connection of the first workpiece and the second workpiece using a connector. In other words, the first workpiece and the second workpiece may be connected using the connector, even though there is a gap between the first workpiece and the second workpiece. This gap is eliminated by operating the connector and moving the first engagement element and the second engagement element along the respective distance. The fact that one of the engagement elements travels over a longer distance than the other engagement element allows the connector to be compact in the insertion direction. The relative position between the connector and one of the first workpiece and the second workpiece will only be affected slightly when operating the connector. The positioning of the connector with respect to the respective other workpiece will be compensated by the movement of the associated engagement element travelling along a comparatively large distance. Thus, when using the connector, a user may essentially concentrate on the movement of the engagement element traveling over the comparatively longer distance. This facilitates establishing a connection of the first workpiece and the second workpiece using the connector.

In an embodiment, the connector has a length measured along the insertion direction, a width measured transversely to the insertion direction and a thickness measured transversely to the insertion direction. The thickness is smaller than the width, and a ratio of the width to the length is 1 to 3, preferably 1.4 to 2. Thus, in order to calculate the ratio of the width to the length, the width needs to be divided by the length. This ratio falls within an interval ranging from 1 to 3, wherein exactly 1 and exactly 3 are included in the interval. This means that the width is exactly as large as the length or larger, i.e. the ratio is 1 or more. Additionally, the width is exactly three times as large as the length or smaller, i.e. the ratio is 3 or less. In the case of a connector that is plate-shaped or flat bar-shaped, the length, width and thickness can, thus, be determined by defining the smallest external dimension as the thickness. The outer dimension that is oriented in the direction of insertion is then defined as the length and the remaining outer dimension as the width. The insertion direction is the direction along which the connector is inserted into the coupling groove or coupling grooves in order to connect associated workpieces. Such connectors are, therefore, comparatively short in the length direction. This means that they can be used to connect workpieces that only provide comparatively little space in the longitudinal direction, i.e. the insertion direction. This is particularly the case with flat workpieces and/or corner connections.

The connector may further comprise a carrier, wherein at least one of the first engagement element and the second engagement element is translatorily supported on the carrier. This means that at least one of the first engagement element and the second engagement element is mounted on the carrier such that it is displaceable in translation with respect to the carrier. Such translational displaceability can be used to bring the engagement element into engagement with an associated undercut. Alternatively or additionally, the translational displaceability can be used to move the first workpiece and the second workpiece towards each other in case the connector engages an associated undercut in the first workpiece and in the second workpiece. Consequently, the first workpiece and the second workpiece can be reliably positioned against each other.

In an example, the carrier comprises at least one holding portion for holding the first engagement element if the connector is in the connection state. Additionally or alternatively, the holding portion is for holding the second engagement element if the connector is in the connection state. Such a holding portion blocks an undesired movement of the associated engagement element relative to the carrier and/or an undesired deformation of the associated engagement element if the connector is in the connection state. Therefore, the at least one holding portion may also be described as supporting the first engagement element if the connector is in the connection state and/or as supporting the second engagement element if the connector is in the connection state. Preferably, the holding portion supports the first engagement element one or both lateral ends thereof. In a case in which a holding portion supports the first engagement element at both lateral ends thereof, the actuation body is preferably positioned between opposing lateral ends of the first engagement element. The same applies for the second engagement element. Consequently, a mechanically stable connection between the connector and the first workpiece and/or the second workpiece is provided. The at least one holding portion may be fixedly connected to the remaining portions of the carrier. Moreover, it is emphasized that the at least one holding portion is separate from the actuation body.

The actuation body may be rotatably supported on the first engagement element or on the second engagement element or on the carrier such that the actuation body is rotatable about an axis of rotation. All other degrees of freedom concerning a movement of the actuation body with respect to the element on which it is rotatably supported, i.e. with respect to the first engagement element, the second engagement element or the carrier, may be blocked. Thus, the only movement the actuation body may perform with respect to the first engagement element, the second engagement element or the carrier may be a rotation. This facilitates the actuation of the actuation body and, thus, the connector as a whole. Moreover, the actuation body can be held in a defined position relative to the associated engagement elements by the carrier. Such a connector is particularly reliable in its function. Furthermore, the carrier can be used to position the connector within the first and/or second coupling groove. In the event that the carrier is used to position the connector both within the first coupling groove and within the second coupling groove, the first workpiece and the second workpiece can be positioned relative to each other by means of the carrier. The carrier can also be used to introduce forces into the connector over a comparatively large area or to transfer forces out of the connector. The connector can, thus, connect the first workpiece and the second workpiece via a high holding force, which, however, only results in comparatively low mechanical stress within the first workpiece and the second workpiece. Preferably, the carrier is designed as a pair of half-shells such that the actuation body can be at least partially accommodated between the two half-shells.

According to an embodiment, at least one of the first engagement element and the second engagement element is movably coupled to the actuation body via a transmission mechanism. The transmission mechanism allows to transform a movement of the actuation body into a movement of the first engagement and/or the second engagement element. This transformation of movements is well-defined which means that a position or orientation of the actuation body may be reliably associated with a position or orientation of the first engagement element and/or the second engagement element. Preferably, both the first engagement element and the second engagement element are movably coupled to the actuation body via the transmission mechanism. The transmission mechanism may be designed as a common transmission mechanism, i.e. a transmission mechanism that interrelates both the first engagement element and the second engagement element to the actuation body. Alternatively, the transmission mechanism comprises two sub-mechanisms, wherein one sub-mechanism interrelates the actuation body and the first engagement element and the second sub-mechanism interrelates the actuation body and the second engagement element. Due to the fact that the transmission of movement is well-defined, the first engagement element and/or the second engagement element may be reliably moved by actuating the actuation body. Altogether, the connector may be operated in a reliable manner.

The transmission mechanism may comprise a cam mechanism. Cam mechanisms are simple and robust in design. In addition, a non-uniform and/or non-linear transmission can be realized in this way between the actuation body and the associated at least one engagement element. At least one extended position and at least one retracted position can therefore be easily realized by means of the cam mechanism.

In an example, the cam mechanism can have a cam surface which is arranged on the actuation body. Furthermore, the cam mechanism can have a mating surface associated to the cam surface. The mating surface may be arranged on at least one of the first engagement element and the second engagement element or may be operatively connected to at least one of the first engagement element and the second engagement element. The mating surface is therefore provided directly on the associated engagement element or on an intermediate element located kinematically between the actuating body and the associated engagement element. In this context, a mating surface is associated with the cam surface if it is intended to contact the cam surface in order to form the cam mechanism, i.e. transmit a force between the actuation body and the respective engagement element. The cam surface and the mating surface may be of any shape, e.g. curved, to effect any predefined transformation between a movement of the actuating body and a movement of the associated engagement element.

The cam surface of the cam mechanism and the associated mating surface can be self-locking at least in a predetermined relative position. In this way, the associated engagement element can be held in a predetermined relative position with respect to the actuation body by means of the cam mechanism.

The actuation body may comprise at least one actuation arm extending from a central portion of the actuation body. Thus, an actuating force can be applied precisely and reliably to an associated engagement element by means of such an actuating arm. Furthermore, the actuating arm can form a lever element by means of which comparatively small forces acting on the actuation interface can be converted into comparatively large forces acting on the associated engagement element.

The actuation arm can be made of a metal material. Such an actuation arm is suitable for particularly high forces and is particularly durable.

According to a variant, a cam surface of the cam mechanism is provided at a free end of the at least one actuation arm. The free end is to be understood as the distal end of the actuation arm, i.e. the end facing away from the pivot point of the actuation arm. Consequently, the cam mechanism associated with the cam surface is actuated by a movement of the actuation arm.

The actuation body may comprise two actuation arms, wherein one of the two actuation arms is associated with the first engagement element and another one of the two actuation arms is associated with the second engagement element. The two actuation arms differ in length. Consequently, notwithstanding the eccentric position of the actuation interface, both the first engagement element and the second engagement element may be operated using the associated actuation arm.

The actuation body may comprise at least one abutment portion for supporting the first engagement element if the connector is in the release state. Additionally or alternatively, the actuation body may comprise at least one abutment portion for supporting the second engagement element if the connector is in the release state. Thus, using such an abutment portion, a position and/or orientation of the associated engagement element may be influenced. This means that such an abutment portion may block undesired positions and/or orientations of the associated engagement element. Put otherwise, the abutment portion ensures that in the release state the engagement element associated with the abutment portion is in a desired position. This facilitates establishing a reliable insertion of the connector into the first workpiece and/or into the second workpiece. Thus, establishing a connection between the first workpiece and the second workpiece is easy. Altogether, handling of the connector is enhanced.

The abutment portion may be arranged at the free end of the actuation arm or on a central portion of the actuation arm. As before, the free end is to be understood as the distal end of the actuation arm, i.e. the end of the actuation arm facing away from the pivot point of the actuation arm. In contrast, the central portion of the actuation arm is the portion of the actuation arm arranged adjacent to the pivot point of the actuation arm. Arranging the abutment portion on the actuation arm is structurally simple and allows the abutment portion to move in a manner that the abutment portion fulfills its function in the release state and is out-of-the-way in the connection state of the connector.

According to an embodiment, the first engagement element and/or the second engagement element comprises a locking element for locking the respective other one of the first engagement element and the second engagement element in a position associated with the connection state of the connector. This covers three alternatives. In a first alternative, the first engagement comprises a locking element for locking the second engagement element in a position associated with the connection state of the connector. In a second alternative, the second engagement element comprises a locking element for locking the first engagement element in a position associated with the connection state of the connector. A third alternative is a combination of the first alternative and the second alternative. This means that in the third alternative the first engagement element comprises a locking element for locking the second engagement element in a position associated with the connection state of the connector and the second engagement element comprises a locking element for locking the first engagement element in a position associated with the connection state of the connector. The locking element may be integrally formed with the associated engagement element, i.e. with the engagement element by which it is comprised. Preferably, the locking element extends from the first engagement element or the second engagement element such that it engages or may engage with a lateral end portions of the respective other one of the first engagement element or the second engagement element. In this context, lateral end portions of the engagement elements are located on opposite sides of the actuation body. Thus, the locking element supports at least one lateral end portion of the respective other engagement element. Moreover, the locking element may be a protrusion which abuts against the engagement element to be locked or is located adjacent to the engagement element to be locked, if the connector is in the connection state. In case the connector is in the release state, the locking element may be out of contact with the engagement element to be locked and/or located at a distance from the engagement element to be locked. In any case, in the release state of the connector, the locking element does not hinder a movement of the engagement element to be locked. In case the locking element is formed integrally with the associated engagement element, the locking element moves together with the associated engagement element, if the connector is transferred from a release state into the connection state or vice versa. Thereby, the locking element may be moved into a position in which it locks or blocks a movement of the engagement element to be locked or into a position in which it enables a movement of the engagement element to be locked. In all alternatives, using a locking element allows to lock at least one of the engagement elements if the connector is in a connection state. This means that the locked engagement element is prevented from leaving its position associated with the locking state of the connector. Additionally or alternatively, the locking element prevents an undesired deformation of the locked engagement element which, without a locking element, might occur due to forces resulting from an engagement of the engagement element with a workpiece. Altogether, the reliability of a connection provided by the connector is enhanced by the locking element.

It is noted that the locking element of the first engagement element and/or the second engagement element essentially fulfils the same functionality as the above-described holding portions, i.e. locking or blocking the first engagement element and/or the second engagement element in a position associated with the connection state of the connector such that an undesired movement of the associated engagement element relative to the carrier and/or an undesired deformation of the associated engagement element is not possible if the connector is in the connection state. Consequently, the locking element of the first engagement element and/or the second engagement element may also be designated as a holding portion, the only difference over the above-described holding portions being that the above-described holding portions are provided on the carrier, wherein the present holding portions are provided on the first engagement element and/or the second engagement element. In particular, the present holding portions are provided on at least one lateral end portion of the first engagement element and/or the second engagement element.

Moreover, the problem is solved by an assembly. The assembly comprises a first workpiece comprising at least one first coupling groove having a groove opening positioned in a first abutment surface of the first workpiece. The first coupling groove comprises a first undercut effective along a groove depth direction. Additionally, the assembly comprises a second workpiece comprising at least one second coupling groove having a groove opening positioned in a second abutment surface of the second workpiece. The second coupling groove comprises a second undercut effective along a groove depth direction. Furthermore, the assembly comprises a connector according to the present invention. The connector is arranged partially in the first coupling groove and partially in the second coupling groove. The first engagement element of the connector engages the first undercut and the second engagement element of the connector engages the second undercut. Moreover, the first abutment surface and the second abutment surface contact each other. As a result, the portion of the connector received in the first coupling groove and the portion of the connector received in the second coupling groove complement each other to form the entirety of the connector. The undercuts are preferably arranged adjacent to the groove base of the associated groove. The first workpiece and the second workpiece are, thus, attached to each other extremely reliably. Furthermore, such a connection is space-saving due to the fact that the connector is plate-shaped or flat bar-shaped. The fact that the actuation interface is arranged eccentrically along the insertion direction offers additional degrees of freedom. Since the actuation interface needs to be accessed in order to operate the connector, the connector may be oriented relative to the first workpiece and the second workpiece such that the necessary access to the actuation interface is guaranteed. This may be achieved by locating the actuation interface in one of the workpieces while allowing a similar depth or the same depth of the coupling grooves of the first workpiece and the second workpiece. Especially for connections of the first workpiece and the second workpiece which comprise an asymmetry, the eccentric orientation of the actuation interface may be advantageous in that the accessibility of the actuation interface may be improved with respect to a symmetric connector, i.e. a connector having an actuation interface arranged centrally along the insertion direction where the access to the actuation interface may have to be located in the joint of the first and the second workpiece or very close to the joint. This applies in particular to the use of the connector for connecting plate-shaped workpieces, especially if the plate-shaped workpieces form a corner. In such an application, the thickness direction of the connector extends parallel to the thickness direction of the plate-shaped workpiece. In addition, the plate-shape or flat bar-shape has the advantage that a holding force, which acts between the connector and each of the first and second workpieces, is distributed over a comparatively large section of the first workpiece and the second workpiece. The holding force is introduced into the respective workpiece via a line contact between the connector and the first and/or second workpiece or via a surface contact between the connector and the first and/or second workpiece. This results in comparatively low mechanical stress within the first workpiece and the second workpiece. In addition, a linear contact or a surface contact between the connector and the first undercut and/or second undercut can be realized. This leads to a particularly secure and reliable connection of the first workpiece and the second workpiece.

In principle, the first workpiece and the second workpiece can be joined together in any way. In preferred variants, the abutment is designed as a corner j oint, butt j oint or miter j oint. In the latter case in particular, the plate shape or flat bar shape and the eccentric position of the actuation interface along the insertion direction is advantageous, as this facilitates the use of the connector for miter joints.

According to an example, an access channel for a tool is provided on the first workpiece and/or on the second workpiece. The access channel extends from an outer surface of the respective first workpiece or second workpiece into the first coupling groove and/or into the second coupling groove. Thus, the actuation body, more precisely the actuation interface of the actuation body, can be reliably reached via the access channel. This allows the connector to be reliably actuated.

According to a variant, the access channel is formed as a cylindrical hole or bore. Such an access channel can be generated in a simple and reliable manner using a drill.

According to another variant, the access channel is open in the direction of the associated contact surface. Such an access channel can also be referred to as a groove. This groove is oriented transversely to the associated coupling groove. No drilling gauge is required to produce such a transverse groove in a predetermined position relative to the coupling groove, as this groove can be produced starting from the contact surface. The transverse groove can therefore be produced easily using a router or dowel cutter. Of course, the transverse groove as well as the first coupling groove and the second coupling groove can also be produced using an industrial CNC milling machine.

The actuation interface of the connector is preferably positioned at an end of the access channel. This means that the actuation interface can be easily reached with an associated tool.

Furthermore, the problem is solved by a method for operating a connector. The connector is in particular a connector according to the present invention. The method comprises
- transferring a connector from a release state into a connection state, wherein a first engagement element of the connector travels over a first distance when moving from a position associated with the release state into a position associated with the connection state, wherein a second engagement element of the connector travels over a second distance when moving from a position associated with the release state into a position associated with the connection state, and wherein the first distance and the second distance are different or
- transferring the connector from a connection state into a release state, wherein a first engagement element of the connector travels over a first distance when moving from a position associated with the connection state into a position associated with the release state, wherein a second engagement element of the connector travels over a second distance when moving from a position associated with the connection state into a position associated with the release state, and wherein the first distance and the second distance are different.

Thus, when transferring the connector from a release state into a connection state, the first engagement element travels over a longer distance than the second engagement element or vice versa. The same applies if the connector is transferred from the connection state into the release state. In other words, one of the engagement elements travels over a comparatively large distance, and the other one of the engagement elements travels over a comparatively short distance. This facilitates handling of the connector and establishing a connection of the first workpiece and the second workpiece using the connector, while ensuring a compact connector. First of all, this is because the first workpiece and the second workpiece may be provided at a distance with respect to one another when establishing a connection of the first workpiece and the second workpiece using a connector. In other words, the first workpiece and the second workpiece may be connected using the connector, even though there is a gap between the first workpiece and the second workpiece. This gap is eliminated by operating the connector and moving the first engagement element and the second engagement element along the respective distance. The fact that one of the engagement elements travels over a longer distance than the other engagement element allows to position the connector at relatively high precision with respect to one of the first workpiece and the second workpiece. The relative position between the connector and this one of the first workpiece and the second workpiece will only be affected slightly when operating the connector, therefore causing only minor to no displacement of the actuation interface relative to the access channel. The positioning of the connector with respect to the respective other workpiece does not need to adhere to the same standard of precision. This will be compensated by the movement of the associated engagement element along a comparatively large distance. Thus, when using the connector, a user may essentially concentrate on the movement of the engagement element traveling over the comparatively longer distance. This facilitates establishing a connection of a first workpiece and the second workpiece using the connector.

In an example, the method further comprises locking the first engagement element and/or the second engagement element in the position associated with the connection state of the connector. Alternatively, the method further comprises enabling a movement of the first engagement element and/or the second engagement element from the position associated with the connection state of the connector into the position associated with the release state of the connector. Locking the first engagement element and/or the second engagement element in a respective position associated with the connection state of the connector enhances the reliability of a connection provided by the connector. This is due to the fact that the locking prevents the locked engagement element from leaving this position. Moreover, the locking prevents an undesired deformation of the locked engagement element which, without a locking element, might occur due to forces resulting from an engagement of the engagement element with a workpiece. Since it is also possible to selectively enable a movement of the first engagement element and/or the second engagement element from the position associated with the connection state of the connector into the position associated with the release state of the connector, i.e. since it is also possible to un-lock the first engagement element and/or the second engagement element, the connector may still be easily withdrawn from a workpiece. Overall, the reliability of a connection established using the connector is increased without compromising the ease of operation of the connector.

It is noted that features, effects and advantages which have been mentioned in connection with one out of the connector according to the invention, the assembly according to the invention and the method according to the invention, apply mutatis mutandis to all other ones of the connector according to the invention, the assembly according to the invention and the method according to the invention.

These and other aspects of the present invention will become apparent from and elucidated with reference to the examples described hereinafter. Examples of the invention will be described in the following with reference to the drawings.
- Figure 1: shows an assembly according to a first embodiment of the present invention, wherein the assembly comprises a connector according to a first embodiment of the present invention which may be operated in accordance with a method according to the present invention,
- Figure 2: shows a sectional view of the assembly of Figure 1 in plane II of Figure 1,
- Figure 3: shows the connector of Figures 1 and 2 in a separate view corresponding to a view along direction III in Figure 2, wherein the connector is in a release state,
- Figure 4: shows a sectional view of the connector of Figure 3, wherein the connector is cut in a plane IV-IV as indicated in Figure 2,
- Figure 5: shows a sectional view of the connector of Figures 3 and 4, wherein the connector is cut in a plane V of Figure 3,
- Figure 6: shows the connector of Figures 1 and 2 in a separate view, wherein the connector is in a connection state, and wherein two engagement elements and a portion of the carrier are not represented for reasons of better visibility,
- Figure 7: shows the connector of Figures 1 and 2 in a separate view, wherein the connector is in a connection state, and wherein two engagement elements are not represented for reasons of better visibility,
- Figure 8: shows an assembly according to a second embodiment of the present invention, wherein the assembly comprises a connector according to a second embodiment of the present invention which may be operated in accordance with a method according to the present invention,
- Figure 9: shows a sectional view of the assembly of Figure 8 in plane IX of Figure 8,
- Figure 10: shows a detail X of Figure 9,
- Figure 11: shows the connector of Figures 8 to 10 in a separate view corresponding to a view along direction XI in Figure 10, wherein the connector assumes a release state,
- Figure 12: shows the connector of Figure 11, wherein the connector is cut in a middle plane XII-XII as indicated in Figure 10,
- Figure 13: shows a connector according to a second embodiment of the present invention which may be operated in accordance with a method according to the present invention, wherein the connector is in a release state,
- Figure 14: shows the connector of Figure 13 in a sectional view in plane XIV,
- Figure 15: shows the connector of Figure 13 in a sectional view in plane XV,
- Figure 16: shows the connector of Figure 13, wherein a carrier of the connector is not represented,
- Figure 17: shows the connector of Figure 13, wherein the connector is in a connection state,
- Figure 18: shows the connector of Figure 17 in a sectional view in plane XVIII,
- Figure 19: shows the connector of Figure 17 in a sectional view in plane XIX,
- Figure 20: shows the connector of Figure 17, wherein a carrier of the connector is not represented,
- Figure 21: shows a third engagement element of the connector of Figures 13 or 17 in a separate perspective view,
- Figure 22: shows the second engagement element and the fourth engagement element of the connector of Figures 13 and 17 in a separate perspective view,
- Figure 23: shows the first engagement element and the third engagement element of the connector of Figures 13 and 17 in a separate perspective view,
- Figure 24: shows the carrier of the connector of Figures 13 and 17 in a separate perspective view, and
- Figure 25: illustrates a guidance of the engagement elements of the connector according to two alternatives.

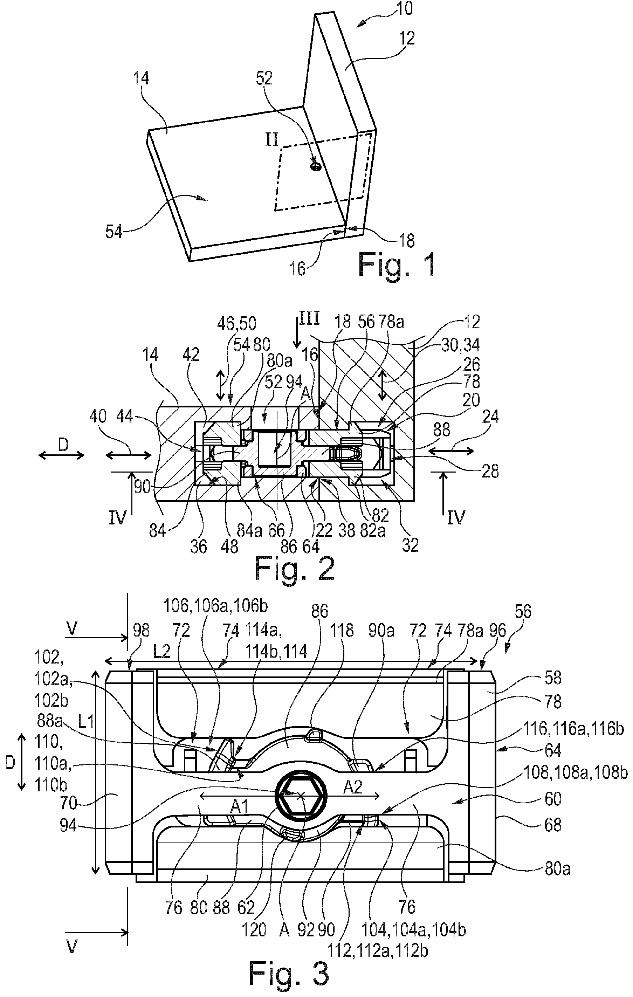

Figure 1 shows an assembly 10 according to a first embodiment.

The assembly comprises a first workpiece 12 and a second workpiece 14.

A first abutment surface 16 is provided on the first workpiece 12.

The second workpiece 14 comprises a second abutment surface 18.

In a state in which the first workpiece 12 and the second workpiece 14 are attached to one another, the first abutment surface 16 and the second abutment surface 18 contact one another such that the first workpiece 12 and the second workpiece 14 form a corner.

The first workpiece 12 has a first coupling groove 20 (see also Figure 2).

A groove opening 22 of the first coupling groove 20 is located in the first abutment surface 16.

A groove depth direction 24 of the first coupling groove 20 is oriented perpendicular to the first abutment surface 16.

The first coupling groove 20 also comprises a first undercut 26, which is effective along the groove depth direction 24 and is arranged adjacent to a groove base 28 of the first coupling groove 20.

In the embodiment shown, the first undercut 26 is designed as a transverse groove running along the groove base 28, with a groove depth direction 30 of the transverse groove oriented perpendicular to the groove depth direction 24 of the first coupling groove 20 and in parallel to the first abutment surface 16.

The first coupling groove 20 also has a third undercut 32, which is effective along the groove depth direction 24 and is arranged adjacent to the groove base 28. The third undercut 32 is provided on a wall of the first coupling groove 20 opposite the first undercut 26.

In the embodiment shown, the third undercut 32 is designed as a transverse groove running along the groove base 28, with a groove depth direction 34 of the transverse groove oriented perpendicular to the groove depth direction 24 of the first coupling groove 20 and in parallel to the first abutment surface 16.

Moreover, the groove depth direction 30 of the transverse groove forming the first undercut 26 and the groove depth direction 34 forming the third undercut 32 are oriented in parallel.

It should be noted that the designation of the undercut as a third undercut 32 is done for the ease of explanation only and does not imply a number of undercuts.

The second workpiece 14 has a second coupling groove 36, a groove opening 38 of which is located in the second abutment surface 18 (see also Figure 2).

The groove opening 38 of the second coupling groove 36 is arranged in such a way that it is opposite the groove opening 22 of the first coupling groove 20 in a state in which the first workpiece 12 and the second workpiece 14 are attached to one another.

A groove depth direction 40 of the second coupling groove 36 is oriented perpendicular to the second abutment surface 18.

The second coupling groove 36 also comprises a second undercut 42, which is effective along the groove depth direction 40 and is arranged adjacent to a groove base 44 of the second coupling groove 36.

In the embodiment shown, the second undercut 42 is designed as a transverse groove running along the groove base 44, with a groove depth direction 46 of the transverse groove oriented perpendicular to the groove depth direction 40 of the second coupling groove 36 and in parallel to the second abutment surface 18.

The second coupling groove 36 also has a fourth undercut 48, which is effective along the groove depth direction 40 and is arranged adjacent to the groove base 44. The fourth undercut 48 is provided on a wall of the second coupling groove 36 opposite the second undercut 42.

In the embodiment shown, the fourth undercut 48 is designed as a transverse groove running along the groove base 44, with a groove depth direction 50 of the transverse groove oriented perpendicular to the groove depth direction 40 of the second coupling groove 36 and in parallel to the second abutment surface 18.

Moreover, the groove depth direction 46 of the transverse groove forming the second undercut 42 and the groove depth direction 50 forming the fourth undercut 48 are oriented in parallel.

It should be noted that the designation of the undercuts as a second undercut 42 and fourth undercut 48 is done for the ease of explanation only and does not imply a number of undercuts.

Furthermore, an access channel 52 for a tool is provided on the second workpiece 14. In the examples shown in the figures, the tool may be a so-called Allen key, which is only to be understood as an example.

The access channel 52 extends from an outer surface 54 of the second workpiece 14, which in the example shown is oriented perpendicular to the second abutment surface 18.

Moreover, the access channel 52 extends into the second coupling groove 36.

In other words, the access channel 52 penetrates a side wall of the second coupling groove 36.

Thus, the tool, in the present example the Allen key, can reach a connector, which is arranged in the second coupling groove 36 as will be explained further below, via the access channel 52.

In the examples shown in the figures, the access channel 52 is formed as a bore.

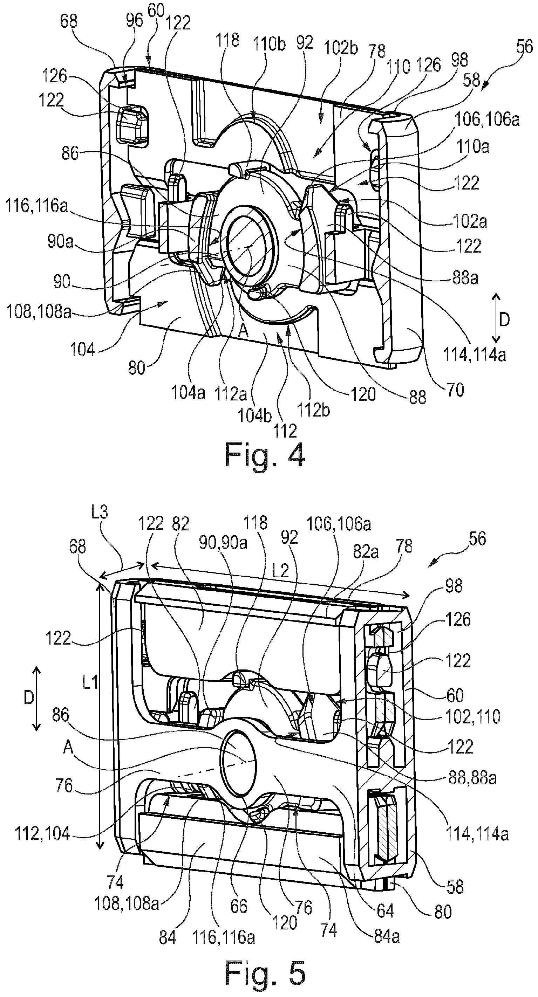

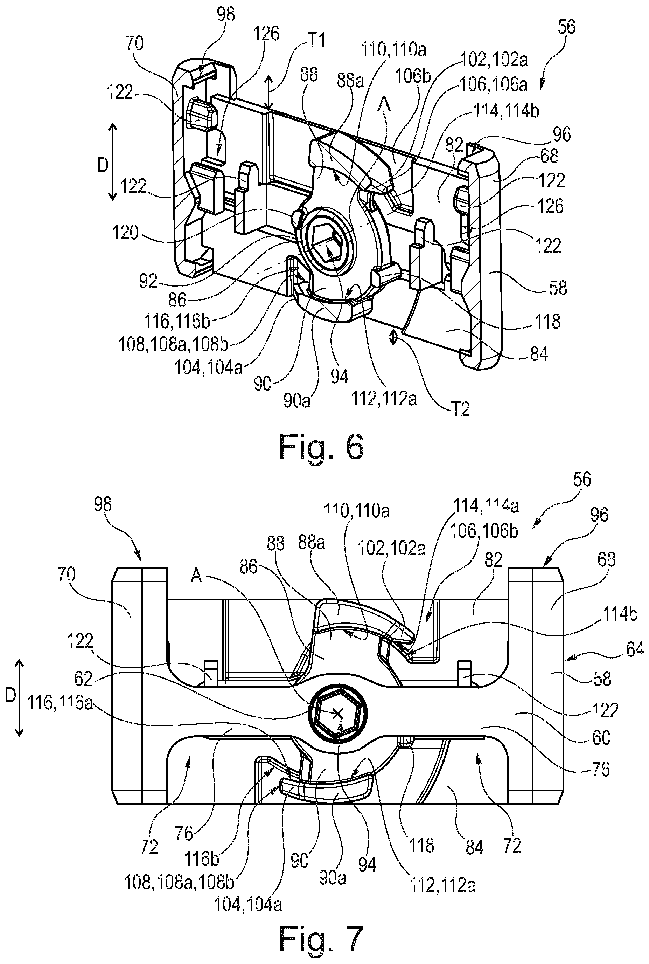

The assembly 10 also comprises a connector 56 according to a first embodiment (see also Figures 3 to 7).

The connector 56 has an overall form of a plate. In other words, the connector 56 is plate-shaped when considering its overall form.

In more detail, the connector 56 has a length L1 which is measured along an insertion direction D. In addition, the connector 56 has a width L2 measured transversely to the insertion direction D and a thickness L3 also measured transversely to the insertion direction D.

The thickness L3 is always smaller than the width L2. The thickness L3 is therefore always the smallest external dimension of the connector 56.

A ratio of the width L2 to the length L1 is 1 to 3. In preferred variants, this ratio is 1.4 to 2. Thus, the width L2 is exactly as large as the length L1 or greater.

The connector 56 comprises a carrier 58 which, in the present example, is made from a plastics material.

Moreover, in the example shown in the figures, the carrier 58 may be designed as one single piece. Alternatively, the carrier 58 may comprise two carrier half-shells which are connected to one another in order to form the carrier. In this context, the two carrier half-shells may be connected via one or more weld seams, e.g. ultrasonic weld seams, one or more clips, or one or more adhesive seams. Also combinations of these connection alternatives are possible.

The carrier 58 comprises a first double-T-shaped wall element 60 with a first bearing opening 62 and a second double-T-shaped wall element 64 with a second bearing opening 66.

The two wall elements 60, 64 are arranged opposite each other at a certain distance and are each coupled to a connecting section 68, 70 at two respective opposite ends.

Thus, the connecting section 68 connects top portions of opposite T-shaped portions 72, 74 of the first wall element 60 and the second wall element 64. In simplified words, the connecting section 68 connects the horizontal bars of T-shaped portions 72, 74 of the first wall element 60 and the second wall element 64.

The same applies to the connecting section 70. Thus, the connecting section 70 connects top portions of opposite T-shaped portions 72, 74 of the first wall element 60 and the second wall element 64. In simplified words, the connecting section 70 connects the horizontal bars of T-shaped portions 72, 74 of the first wall element 60 and the second wall element 64.

In the connector 56, the top portions of the T-shaped portions 72, 74 and the connecting sections 68, 70 extend substantially along the insertion direction D of the connector 56.

The leg elements 76 of the T-shaped portions 72 of the first wall element 60 are arranged eccentrically with respect to the insertion direction D of the connector 56. With reference to Figure 3 this means that the leg elements 76 of the T-shaped portions 72, 74 are arranged closer to a lower end of the carrier 58 than to an upper end of the carrier 58. In other words, the leg elements 76 of the T-shaped portions 72, 74 are arranged closer to one end of the connector 56 along the direction of the length L1 than to the opposite end of the connector 56 along the direction of the length L1.

The same applies to the leg elements 76 of the T-shaped portions 74 of the second wall element 64.

In simplified words, the T-shaped portions 72, 74 are not symmetrical since the leg elements 76 of the T-shaped portions 72, 74, i.e. the portions of the T-shape 72, 74 corresponding to the usually vertical bar of the T-shape, are offset from a center.

The two connecting sections 68, 70 are designed to contact respective opposite ends of the first coupling groove 20 and/or the second coupling groove 36 if the connector 56 is arranged within the first coupling groove 20 and/or within the second coupling groove 36. In this context, the opposite ends of the first coupling groove 20 are understood as ends of the first coupling groove 20 along the first coupling groove's length. In the present example, the first coupling groove's length is oriented perpendicular to the groove depth direction 24 of the first coupling groove 20 and also perpendicular to the depth directions 30, 34 of the transverse grooves forming the undercuts 26, 32. Similarly, the opposite ends of the second coupling groove 36 are understood as ends of the second coupling groove 36 along the second coupling groove's length. In the present example, the second coupling groove's length is oriented perpendicular to the groove depth direction 40 of the second coupling groove 36 and also perpendicular to the depth directions 46, 50 of the transverse grooves forming the undercuts 42, 48. The first workpiece 12 and the second workpiece 14 can, thus, be brought into a predefined relative position by means of the carrier 58.

The connector 56 also comprises a first engagement element 78 configured to anchor the connector 56 in the first undercut 26, a second engagement element 80 configured to anchor the connector 56 in the second undercut 42, a third engagement element 82 configured to anchor the connector 56 in the third undercut 32, and a fourth engagement element 84 configured to anchor the connector 56 in the fourth undercut 48.

To this end, the first engagement element 78 comprises an engagement rib 78a, the second engagement element 80 comprises an engagement rib 80a, the third engagement element 82 comprises an engagement rib 82a and the fourth engagement element 84 comprises an engagement rib 84a.

Considering the insertion direction D, the first engagement element 78 and the third engagement element 82 are arranged at a first end of the connector 56 and the second engagement element 80 and the fourth engagement element 84 are arranged at a second end of the connector 56. The first end and the second end are arranged opposite one another in the direction of the thickness L3.

Furthermore, the connector 56 has an actuation body 86, which is supported in the first bearing opening 62 and the second bearing opening 66 of the carrier 58 such that the actuation body 86 can rotate about an axis A with respect to the carrier 58.

The axis A is oriented in parallel to the thickness L3 of the connector 56, i.e. perpendicular to the insertion direction D and the direction of the width L2.

The actuation body 86 comprises a first actuation arm 88, and a second actuation arm 90 both extending from a central portion 92 of the actuation body 86.

The first actuation arm 88 and the second actuation arm 90 extend in diametrically opposite directions with respect to the axis A of rotation.

Accordingly, the first actuation arm 88 and the second actuation arm 90 are also rotatable about the axis A of rotation.

In the present example, the first actuation arm 88 and the second actuation arm 90 have different lengths A1, A2. More precisely, a length A1 of the first actuation arm 88 is larger than a length A2 of the second actuation arm 90, wherein both lengths A1, A2 are measured in a radial direction with respect to the axis A of rotation.

Moreover, as will be explained in more detail further below, the first actuation arm 88 is associated with the first engagement element 78 and the third engagement element 82. The second actuation arm 90 is associated with the second engagement element 80 and the fourth engagement element 84.

Furthermore, an actuation interface 94 is provided on the actuation body 86, more precisely on the central portion 92 of the actuation body 86.

In the embodiment shown, the actuation interface 94 is designed as a blind hole with a hexagonal cross-section. This cross-section is dimensioned in such a way that it can cooperate with an Allen key.

Due to the fact that the leg elements 76, the first bearing opening 62 and the second bearing opening 66 are arranged eccentrically with respect to the insertion direction D, also the actuation interface 94 is arranged eccentrically with respect to the insertion direction D.

Each of the engagement elements 78, 80, 82, 84 is designed as an independent component. In particular, the engagement elements 78, 80, 82, 84 are designed as components separate from the actuation body 86.

Each of the engagement elements 78, 80, 82, 84 is substantially plate-shaped.

However, due to the fact that the actuation interface 94 is arranged eccentrically with respect to the insertion direction D, the first engagement 78 and the third engagement element 82 are longer along the insertion direction D than the second engagement element 80 and the fourth engagement element 84.

Moreover, each of the engagement elements 78, 80, 82, 84 is mounted on the carrier 58 such that it can be displaced in translation along the insertion direction D.

For this purpose, the connecting sections 68, 70 form guide rails 96, 98.

Even though the principal displacement direction corresponds to the insertion direction D, the guide rails 96, 98 also allow for a displacement perpendicular to the insertion direction D, i.e. in a direction of the thickness L3. this displacement is necessary in order to allow the engagement elements 78, 80, 82, 84 to engage the associated one of the undercuts 26, 32, 42, 48.

In the connector 56, the actuation body 86 is kinematically coupled to each of the engagement elements 78, 80, 82, 84 via a primary cam mechanism. Thus, in total four primary cam mechanisms are provided.

All primary cam mechanisms are configured to insert the associated engagement element 78, 80, 82, 84 into the associated undercut 26, 32, 42, 48 if the connector 56 is positioned in the first coupling groove 20 and the second coupling groove 36.

In more detail, the first engagement element 78 is kinematically coupled to the actuation body 86, or more specifically to the first actuation arm 88, via a first primary cam mechanism 102.

In this case, the first primary cam mechanism 102 comprises a cam surface 102a, which is arranged at a free end of the first actuation arm 88. The cam surface 102a extends obliquely with respect to a circumferential direction of the first actuation arm 88, which is rotatable about the axis A of rotation.

An associated mating surface 102b is arranged on the first engagement element 78. More precisely, the mating surface 102b is formed on an inner side of the first engagement element 78, i.e. on a side of the first engagement element 78 facing the interior of the connector 56.

If the cam surface 102a slides against the mating surface 102b, the first engagement element 78 is thus displaced outwards with respect to the carrier 58, i.e. along the direction of the thickness L3. The first engagement element 78 is, thus, transferred to its extended position along the thickness L3 direction of the connector 56.

Similarly, the second engagement element 80 is kinematically coupled to the actuation body 86, or more precisely to the second actuation arm 90, via a second primary cam mechanism 104.

In this case, the second primary cam mechanism 104 comprises a cam surface 104a, which is arranged at a free end of the second actuation arm 90. The cam surface 104a extends obliquely with respect to a circumferential direction of the second actuation arm 90, which is rotatable about the axis A of rotation.

An associated mating surface 104b is arranged on the second engagement element 80. More precisely, the mating surface 104b is formed on an inner side of the second engagement element 80, i.e. on a side of the second engagement element 80 facing the interior of the connector 56.

If the cam surface 104a slides against the mating surface 104b, the second engagement element 80 is thus displaced outwards with respect to the carrier 58, i.e. along the direction of the thickness L3. The second engagement element 80 is, thus, transferred to its extended position along the thickness L3 direction of the connector 56.

Accordingly, the third engagement element 82 is kinematically coupled to the actuation body 86, or more precisely to the first actuation arm 88, via a third primary cam mechanism 106.

In this case, the third primary cam mechanism 106 comprises a cam surface 106a, which is arranged at a free end of the first actuation arm 88. The cam surface 106a extends obliquely with respect to a circumferential direction of the first actuation arm 104, which is rotatable about the axis A of rotation.

An associated mating surface 106b is arranged on the third engagement element 82. More precisely, the mating surface 106b is formed on an inner side of the third engagement element 82, i.e. on a side of the third engagement element 82 facing the interior of the connector 56.

If the cam surface 106a slides against the mating surface 106b, the third engagement element 82 is displaced outwards with respect to the carrier 58, i.e. along a direction of the thickness L3. The third engagement element 82 is, thus, transferred to its extended position along the thickness L3 direction of the connector 56.

In this context, the cam surface 102a and the cam surface 106a are arranged on opposite sides of a head 88a of the first actuation arm 88.

When viewed radially, the head 88a has the shape of a wedge that is beveled on both sides, i.e. on a side facing the first engagement element 78 and on a side facing the third engagement element 82. By actuating the first actuation arm 88, the head 88a can, thus, be pushed between the first engagement element 78 and the third engagement element 82 like a wedge, such that these are pushed apart by means of the head 88a and, thus, both the first engagement element 78 and the third engagement element 82 assume their extended position along the direction of the thickness L3 of the connector 56.

Furthermore, the fourth engagement element 84 is kinematically coupled to the actuation body 86, more specifically to the second actuation arm 90, via a fourth primary cam mechanism 108.

Here, the fourth primary cam mechanism 108 comprises a cam surface 108a, which is arranged at a free end of the second actuation arm 90. The cam surface 108a extends obliquely with respect to a circumferential direction of the second actuation arm 90, which is rotatable about the axis A of rotation.

An associated mating surface 108b is arranged on the fourth engagement element 84. More precisely, the mating surface 108b is formed on an inner side of the fourth engagement element 84, i.e. on a side of the fourth engagement element 84 facing the interior of the connector 56.

If the cam surface 108a slides against the mating surface 108b, the fourth engagement element 84 is displaced outwards with respect to the carrier 58. The fourth engagement element 84 is, thus, transferred to its extended position along the direction of the thickness L3 of the connector 56.

In this context, the cam surface 104a and the cam surface 108a are arranged on opposite sides of a head 90a of the second actuation arm 90.

When viewed radially, the head 90a has the shape of a wedge that is beveled on both sides, i.e. on a side facing the second engagement element 80 and on a side facing the fourth engagement element 84. By actuating the second actuation arm 90, the head 90a can therefore be pushed between the second engagement element 80 and the fourth engagement element 84 like a wedge, such that the second engagement element 80 and the fourth engagement element 84 are pushed apart by means of the head 90a and, thus, assume their extended position along the direction of the thickness L3 of the connector 56.

Furthermore, in the connector 56 according to the first embodiment, the actuation body 86 is kinematically coupled to each of the engagement elements 78, 80, 82, 84 via a secondary cam mechanism.

All secondary cam mechanisms are configured to translationally pull the associated engagement element 78, 80, 82, 84 along the direction predetermined by the respective guide rail 96, 98 and substantially corresponding to the insertion direction D towards a center point of the connector 56 or towards the axis A of rotation. The secondary cam mechanisms, thus, cause the respective associated engagement elements 78, 80, 82, 84 to be transferred to their retracted position along the insertion direction D.

In a situation in which the connector 56 is positioned in the first coupling groove 20 and in the second coupling groove 36 and the engagement elements 78, 80, 82, 84 engage the respectively associated undercut 26, 32, 42, 48, the first workpiece 12 and the second workpiece 14 can be moved towards each other by means of the secondary cam mechanisms and/or can be pressed against each other.

In more detail, the first engagement element 78 is kinematically coupled to the actuation body 86, more specifically the first actuation arm 88, via a first secondary cam mechanism 110.

In this case, the first secondary cam mechanism 110 comprises a cam surface 110a, which is arranged at a free end of the first actuating arm 88. The cam surface 110a is formed on a radially inwardly facing side of the head 88a of the first actuating arm 88 and is curved. An axis of curvature runs parallel to the axis A of rotation.

An associated mating surface 110b is arranged on a projection on an inner side of the first engagement element 78. The mating surface 110b points radially outwards with respect to the axis A of rotation.

The mating surface 110b is also curved around an axis of curvature that runs parallel to the axis A of rotation.

If the cam surface 110a slides on the mating surface 110b, the first engagement element 78 is, thus, pulled inwards with respect to the carrier 58, i.e. in the direction of the axis A of rotation. As a result, the first engagement element 78 is transferred to the retracted position with respect to the insertion direction D of the connector 56.

The second engagement element 80 is kinematically coupled to the actuating body 86, or more precisely to the second actuating arm 90, via a second secondary cam mechanism 112.

In this case, the second secondary cam mechanism 112 comprises a cam surface 112a, which is arranged at a free end of the second actuating arm 90. The cam surface 112a is formed on a radially inwardly facing side of the head 90a of the second actuating arm 90 and is curved. An axis of curvature runs parallel to the axis A of rotation.

An associated mating surface 112b is arranged on a projection on an inner side of the second engagement element 80. The mating surface 112b points radially outwards with respect to the axis A of rotation.

The mating surface 112b is also curved around an axis of curvature that runs parallel to the axis A of rotation.

If the cam surface 112a slides on the mating surface 112b, the second engagement element 80 is, thus, pulled inwards with respect to the carrier 58, i.e. in the direction of the axis A of rotation. As a result, the second engagement element 80 is transferred to the retracted position with respect to the insertion direction D of the connector 56.

The third engagement element 82 is also kinematically coupled to the actuating body 86, or more precisely to the first actuating arm 88, via a third secondary cam mechanism 114.

In this case, the third secondary cam mechanism 114 comprises a cam surface 114a, which is arranged at a free end of the first actuating arm 88. The cam surface 114a is formed on a radially inwardly facing side of the head 88a of the first actuating arm 88 and is curved. An axis of curvature runs parallel to the axis A of rotation.

An associated mating surface 114b is arranged on a projection on an inner side of the third engagement element 82. The mating surface 114b points radially outwards with respect to the axis A of rotation.

The mating surface 114b is also curved around an axis of curvature that runs parallel to the axis A of rotation.

If the cam surface 114a slides on the mating surface 114b, the third engagement element 82 is pulled inwards with respect to the carrier 58, i.e. in the direction of the axis A of rotation. As a result, the third engagement element 82 is transferred to the retracted position with respect to the insertion direction D of the connector 56.

Furthermore, the fourth engagement element 84 is kinematically coupled to the actuating body 86, or more precisely to the second actuating arm 90, via a fourth secondary cam mechanism 116.

The fourth secondary cam mechanism 116 comprises a cam surface 116a, which is arranged at a free end of the second actuating arm 90. The cam surface 116a is formed on a radially inward-facing side of the head 90a of the second actuating arm 90 and is curved. An axis of curvature runs parallel to the axis A of rotation.

An associated mating surface 116b is arranged on a projection on an inner side of the fourth engagement element 84. The mating surface 116b points radially outwards with respect to the axis A of rotation.

The mating surface 116b is also curved around an axis of curvature that runs parallel to the axis A of rotation.

If the cam surface 116a slides on the mating surface 116b, the fourth engagement element 84 is pulled inwards with respect to the carrier 58, i.e. in the direction of the axis A of rotation. As a result, the fourth engagement element 84 is transferred to the retracted position with respect to the insertion direction D of the connector 56.

The actuation body 86 additionally comprises a first abutment portion 118 for supporting the first engagement element 78 and the third engagement element 82 if the connector 56 is in the release state. In this state, the first engagement element 78 and the third engagement element 82 may be supported on the first abutment portion 118 along the insertion direction D.

The first abutment portion 118 is formed as a protrusion on the central portion 92 of the actuation body 86.

The actuation body 86 further comprises a second abutment portion 120 for supporting the second engagement element 80 and the fourth engagement element 84 if the connector 56 is in the release state. In this state, the second engagement element 80 and the fourth engagement element 84 may be supported on the second abutment portion 120 along the insertion direction D.

Also, the second abutment portion 120 is formed as a protrusion on the central portion 92 of the actuation body 86. Preferably the second abutment portion 120 and the first abutment portion 118 are formed on diametrically opposite sides of the actuation body 86.

The first abutment portion 118 and the second abutment portion 120 are especially operative, i.e. abutting against the respectively associated engagement elements 78, 80, 82, 84, if the primary cam mechanisms 102, 104, 106, 108 and/or the secondary cam mechanisms 110, 112, 114, 116 are not yet operative, for example because the actuating arms 88, 90 are in a position in which they do not contact the engagement elements 78, 80, 82, 84 or the engagement elements 78, 80, 82, 84 are in a position associated with the release state.

Coming back to the carrier 58, the carrier 58 additionally comprises a number of holding portions 122 which are configured for holding the first engagement element 78 if the connector is in the connection state. In the present example, the holding portions 122 are geometric elements of the carrier 58 which block a movement of the engagement element 78 in the direction of the thickness L3 of the connector 56.

The same applies to the third engagement element 82.

However, the holding portions 122 are not designed to interact with the second engagement element 80 and the fourth engagement element 84. Thus, in the connection state, the second engagement element 80 and the fourth engagement element 84 do not contact any of the holding portions 122.

In order to allow the first engagement element 78 and the third engagement element 82 to pass by the holding portions 122 in case the first engagement element 78 and the third engagement element 82 are in a position associated with a release state of the connector 56 or in case the first engagement element 78 and the third engagement element 82 are transferred into a position associated with a release state of the connector 56, both the first engagement element 78 and the third engagement element 82 are provided with recesses 126 which are arranged in a manner that one of the holding portions 122 may be at least partially received in an associated one of the recesses 126 if the first engagement element 78 and the third engagement element 82 are in a position associated with a release state of the connector 56.

Similar to holding portions 122 it is also conceivable that the carrier 58 comprises a number of holding portions which are configured for holding the second engagement element 80 and the fourth engagement element 84 if the connector 56 is in the connection state. These holding portions are configured to block a movement of the second engagement element 80 and the fourth engagement element 84 in the direction of the thickness L3 of the connector 56.

In the assembly 10, the first workpiece 12 and the second workpiece 14 are fastened together by means of the connector 56.

In order to form the assembly 10, the connector 56 is partially inserted into the second coupling groove 36.

In this state, the actuation interface 94 is positioned at a coupling groove-side end of the access channel 52.

Moreover, another portion of the connector 56 is arranged in the first coupling groove 20.

Thus, the connector 56 is accommodated within the first coupling groove 20 and the second coupling groove 36.

The actuation body 86 is in a position in which the first abutment portion 118 contacts the first engagement element 78 and the third engagement element 82 and the second abutment portion 120 contacts the second engagement element 80 and the fourth engagement element 84. Due to this, a comparatively small gap is provided between the first workpiece 12 and the second workpiece 14 even if the first engagement element 78 and the third engagement element 82 contact the groove base 28 of the first coupling groove 20 and the second engagement element 80 and the fourth engagement element 84 contact a groove base 44 of the second coupling groove 36.

The head 88a of the first actuation arm 88 and the head 90a of the second actuation arm 90 do not yet interact with the engagement elements 78, 80, 82, 84.

The engagement elements 78, 80, 82, 84 do not yet engage in the associated undercuts 26, 32, 42, 48.

Furthermore, the connecting sections 68, 70 are each in contact with both one lateral end of the first coupling groove 20 and one lateral end of the second coupling groove 36. Thus, the first workpiece 12 and the second workpiece 14 assume a predetermined relative position to one another.

Now the actuating body 86 may be rotated clockwise by approximately 15 degrees. The clockwise direction therefore corresponds to the actuating direction of the actuating body 86.

In this context, the actuation body 86 can be rotated, for example by means of a tool engaging the actuation interface 94.

Consequently, the engagement elements 78, 80, 82, 84 are now pushed apart by means of the respectively associated primary cam mechanism 102, 104, 106, 108, such that they engage in the respectively associated undercuts 26, 32, 42, 48.

As far as the secondary cam mechanisms 110, 112, 114, 116 are concerned, the associated cam surfaces 110a, 112a, 114a, 116a are already in contact with a section of the associated mating surfaces 110b, 112b, 114b, 116b located at the front along the actuating direction. However, these sections are configured such that the secondary cam mechanisms 110, 112, 114, 116 do not yet cause any movement of the engagement elements 78, 80, 82, 84 along the insertion direction D. Furthermore, any movement of the engagement elements 78, 80, 82, 84 along the insertion direction D towards the axis A of rotation is prevented by the abutment portions 118, 120.

Subsequently, the actuation body 86 is rotated further clockwise by an additional approximately 90 degrees.

In this case, the abutment portions 118, 120 disengage from the respectively associated engagement elements 78, 80, 82, 84 and the cam surfaces 110a, 112a, 114a, 116a of the secondary cam mechanisms 110, 112, 114, 116 interact with the sections of the associated mating surfaces 110b, 112b, 114b, 116b in such a way that the engagement elements 78, 80, 82, 84 are each pulled translationally in the direction of the axis A of rotation by means of the secondary cam mechanisms 110, 112, 114, 116.

In the present example, the secondary cam mechanisms 110, 112, 114, 116 are configured such that the first engagement element 78 and the third engagement element 82 travel over a first distance T1 when moving from a position associated with the release state into a position associated with the connection state.

The second engagement element 80 and the fourth engagement element 84 travel over a second distance T2 when moving from a position associated with the release state into a position associated with the connection state.

In the present example, the first distance T1 is larger than the second distance T2.

This results in the first contact surface 16 and the second contact surface 18 making contact with each other. This contact can be force-loaded.

At the same time, the first engagement element 78 and the third engagement element 82 abut against opposite sides of the holding portions 122 along a direction of the thickness L3 of the connector 56.

In this position the secondary cam mechanisms 110, 112, 114, 116 can also be designed to be self-locking. The first workpiece 12 is thus reliably secured to the second workpiece 14.

In order to transfer the connector 56 from this connection state into a release state in which the first workpiece 12 and the second workpiece 14 can be separated from one another and also the connector 56 can be separated from the first workpiece 12 and the second workpiece 14, the actuation body 86 needs to be turned backwards, i.e. counter-clockwise.

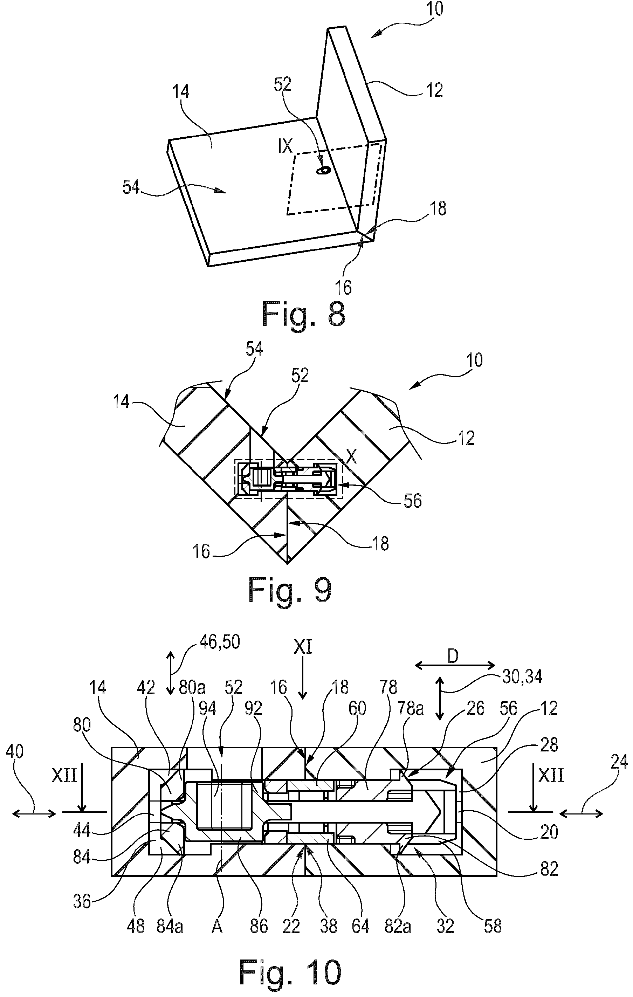

Figures 8 to 10 show an assembly 10 according to a second embodiment. In the following, only the differences with respect to the above-described embodiment will be explained. Otherwise, the above explanations apply mutatis mutandis.

A first difference relates to the fact that the first workpiece 12 and the second workpiece 14 form a miter joint.

This means that the first abutment surface 16 is cut at an angle of substantially 45° with respect to an original side surface of the plate-shaped first workpiece 12.

In the same manner, the second abutment surface 18 is cut at an angle of substantially 45° with respect to an original side surface of the plate-shaped second workpiece 14.

Consequently, in a state in which the first abutment surface 16 and the second abutment surface 18 contact one another, the first workpiece 12 and the second workpiece 14 are positioned at an angle of substantially 90° with respect to one another.

As before, a first coupling groove 20 is provided on the first workpiece 12. However, the first coupling groove now extends perpendicularly from the first abutment surface 16 and, thus, is inclined with respect to the first workpiece 12 as a whole.

The same applies to the second coupling groove 36 which is provided on the second workpiece 14. Also the second coupling groove 36 extends perpendicularly from the second abutment surface 18 and, thus, is inclined with respect to the second workpiece 14 as a whole.

As far as the design of the first coupling groove 20 and the second coupling groove 36 is concerned, reference is made to the above explanations.

Due to the fact that the coupling grooves 20, 36 are inclined with respect to the associated workpieces 12, 14, also the access channel 52, which extends from an outer surface 54 of the second workpiece 14, is inclined with respect to the outer surface 54.

In the assembly 10 according to the second embodiment, the connector 56 is designed according to a second embodiment (see especially Figures 10 to 12).

Also in respect of the connector 56 according to the second embodiment, only the differences with respect to the connector as explained in connection with figures 1 to 7 will be mentioned. Otherwise, the above explanations apply mutatis mutandis.

The first difference relates to the fact that the actuation body 86 now is rotatably supported on the second engagement element 80 and the fourth engagement element 84. Consequently, the connector 56 does not comprise bearing openings for a rotatable support of the actuation body 86 on the carrier 58. In other words, the second engagement element 80 and the fourth engagement element 84 now comprise bearing openings for a rotatable support of the actuation body 86.

Since the actuation body 86 now is rotatably supported on the second engagement element 80 and the fourth engagement element 84, the actuation body 86 now also translates linearly together with the second engagement element 80 and the fourth engagement element 84 when the actuation body 86 is rotated in order to bring the connector 56 from the connection state into the release state or vice versa.

Furthermore, the first actuation arm 88 and the second actuation arm 90 are now provided at an angle of approximately 60°.

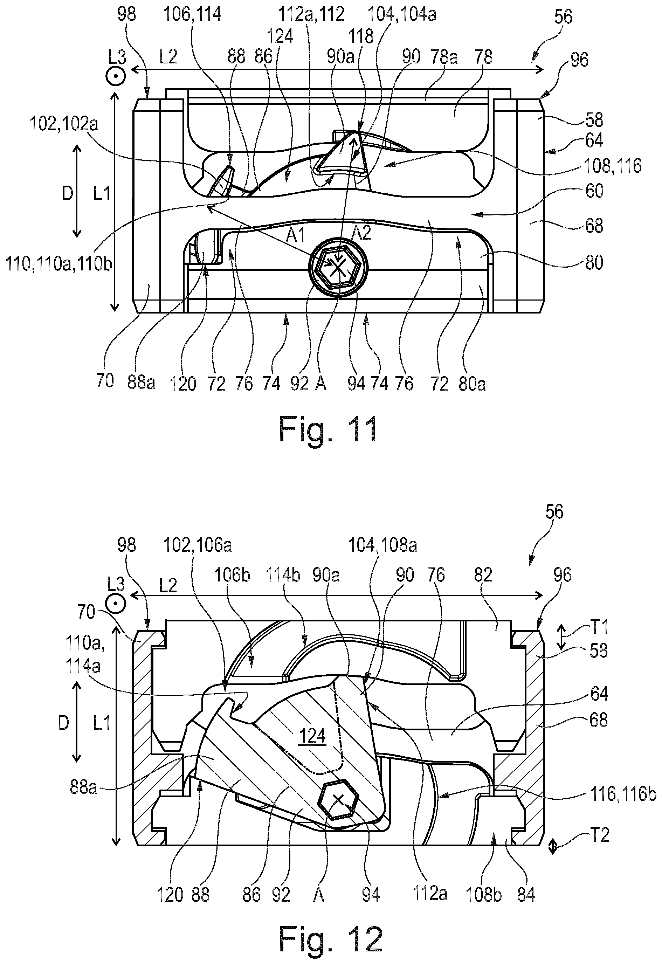

Moreover, the first actuation arm 88 and the second actuation arm 90 are coupled by a disk-segment shaped connection element 124. This enhances the stability of the actuation body 86. In the embodiment shown, e.g. in Fig. 12, the first actuation arm 88 and the second actuation arm 90 are integrally formed with the disk-segment shaped element.

A further difference relates to the fact that the first abutment portion 118 is provided on the head 88a of the first actuation arm 88, i.e. at the free end of the first actuation arm 88.

Additionally, a recess for receiving the first abutment portion 118 and/or a portion of the head 88a of the first actuation arm 88 if the connector 56 is in the release state, is formed on each of the second engagement element 80 and on the fourth engagement element 84. In the example shown in the figures, the recess is formed on a portion of the engagement elements 80, 84 located adjacent to the connecting section 70 of the carrier 56. In other words, the recesses are formed at an end of the second engagement element 80 and the fourth engagement element 84 facing the connection section 70. Moreover, the recesses are formed on a respective side of the engagement elements 80, 84 facing towards the first wall element 60 of the carrier 56.

The second abutment portion 120 is provided on the head 90a of the second actuation arm 90, i.e. at a free end of the second actuation arm 90.

Additionally, a recess for receiving the second abutment portion 120 if the connector 56 is in the release state, is formed on each of the first engagement element 78 and the third engagement element 82. In the example the recess is formed on an outer surface of the engagement elements 78, 82 and on the rear side of the engagement elements 78, 82, i.e. the sides facing towards the axis A of rotation.

Consequently, with the connector 56 according to the second embodiment in a release state, the first engagement element 78 and the third engagement element 82 are supported on the head 90a of the second actuation arm 90 and the second engagement element 80 and the fourth engagement element 84 are supported on the head 88a of the first actuation arm 88.

The first actuation arm 88 and the second actuation arm 90 extend in radial directions, such that an angle between the first actuation arm 88 and the second actuation arm 90 with respect to the axis A of rotation is greater than 45 degrees and less than 180 degrees, in particular less than 90 degrees. In the example shown in figures 11 and 12, the angle between the first actuation arm 88 and the second actuation arm 90 is approximately 75 degrees.

Furthermore, the connector 56 according to the second embodiment does not comprise any holding portions. However, it is also conceivable that the connector 56 according to the second embodiment does comprise holding portions similar to the first embodiment.

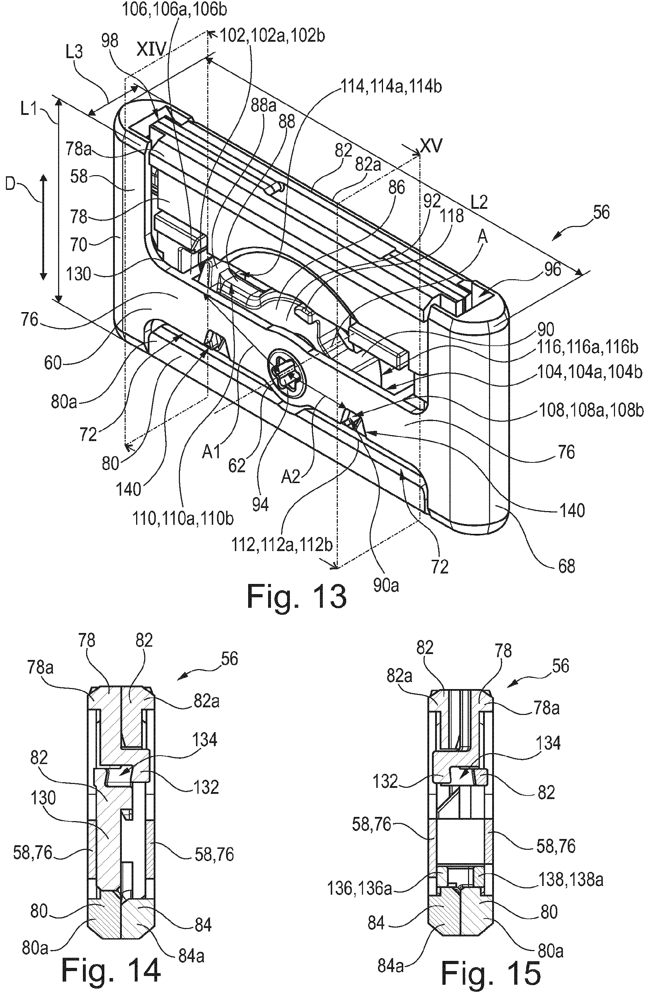

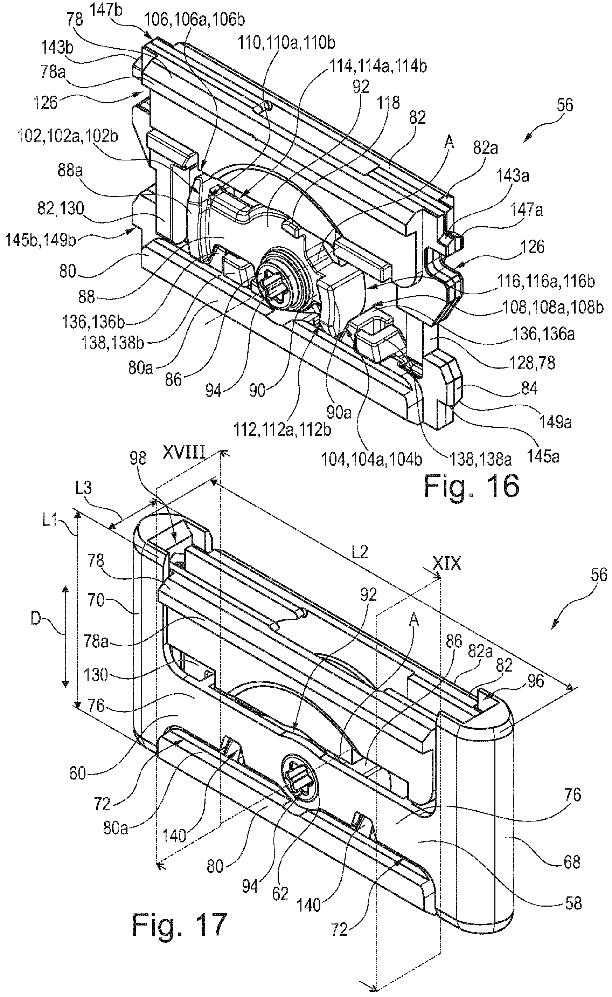

Figures 13 to 24 show a connector 56 according to a third embodiment.

The connector 56 according to the third embodiment may be regarded as a variant of the connector 56 according to the first embodiment. Therefore, only the differences with respect to the above-described connector 56 according to the first embodiment will be explained in the following. Otherwise, the above explanations apply mutatis mutandis. This means in particular that the connector 56 according to the third embodiment can be used to connect a first workpiece 12 and a second workpiece 14 in the same manner as has been explained in connection with the connector 56 according to first and second embodiment. In other words, the connector 56 according to the third embodiment, may form part of an assembly 10 in the same manner as the connector 56 according to the first embodiment.

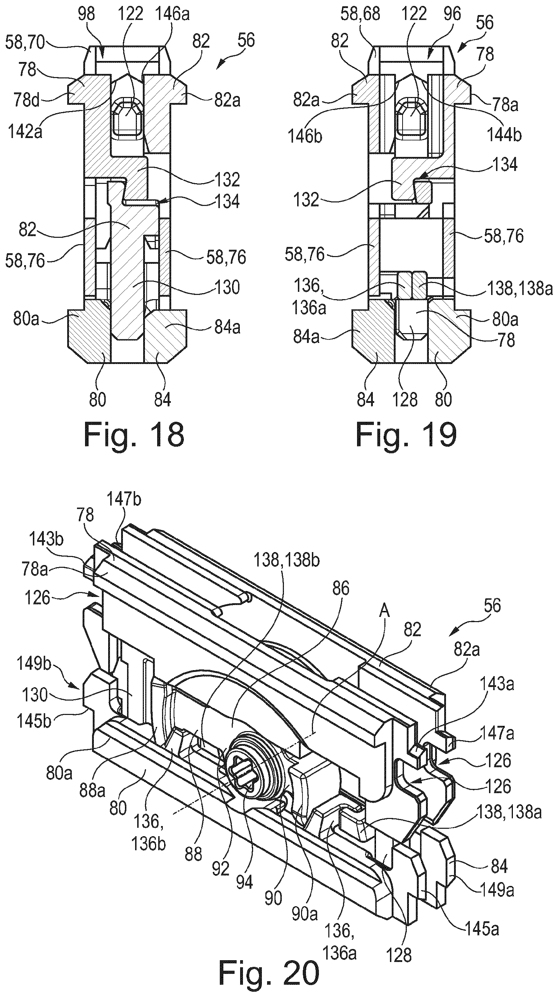

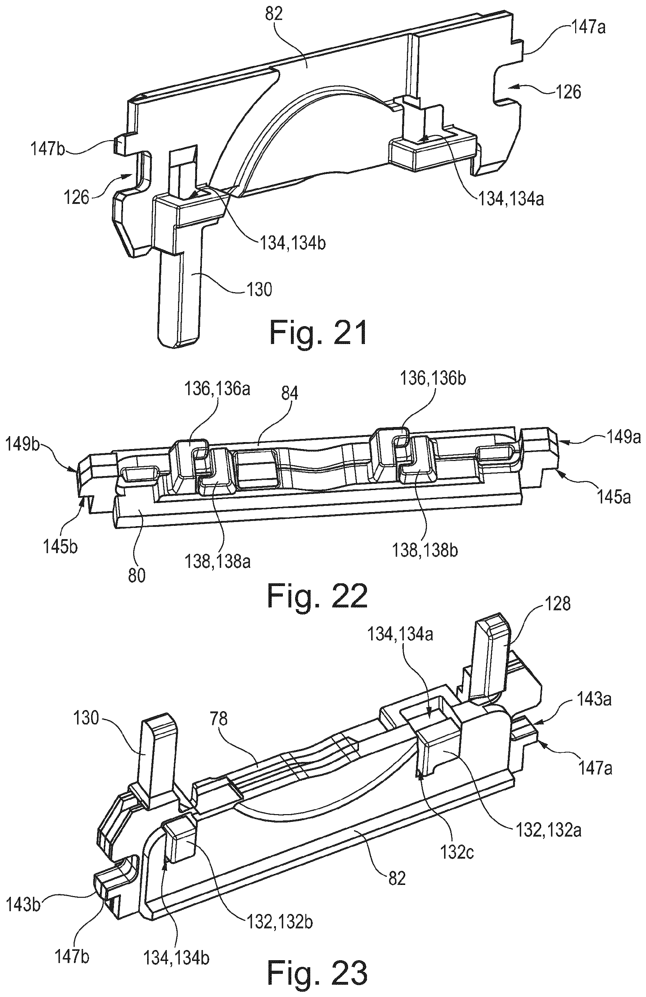

A first difference of the connector 56 according to the third embodiment relates to the fact that the first engagement element 78 comprises a locking element 128 (see in particular Figures 19 and 23).

In the present example, the locking element 128 is formed as a pin or stud which extends from the first engagement element 78 towards the second engagement element 80 and the fourth engagement element 84. This means that the locking element 128 extends along the insertion direction D and the length L1 of the connector 56.

The locking element 128 is integrally formed with the remaining portions of the first engagement element 78. Moreover, in the present example, the locking element 128 has a substantially rectangular cross section.

A length of the locking element 128, i.e. an extension of the locking element 128 along the length direction of the connector 56 is chosen such that in a release state of the connector 56, the locking element 128, more precisely a free end of the locking element 128, is located adjacent to the second engagement element 80 along the insertion direction D and the length L1 of the connector 56.

Moreover, the length of the locking element 128 is chosen such that, in a connection state of the connector 56, a free end of the locking element 128 is located between the second engagement element 80 and the fourth engagement element 84 along the thickness L3 of the connector 56. In this position, the locking element 128 prevents or limits a movement of the second engagement element 80 and the fourth engagement element 84 towards one another. Moreover, the locking element 128 prevents a deformation of the second engagement element 80 and the fourth engagement element 84 towards one another.

Similar to the first engagement element 78, also the third engagement element 82 comprises a locking element 130 (see in particular Figures 14, 18, 21 and 23.

In the present example, the locking element 130 is formed as a pin or stud which extends from the third engagement element 82 towards the second engagement element 80 and the fourth engagement element 84. This means that the locking element 130 extends along the insertion direction D and the length L1 of the connector 56.

The locking element 130 is integrally formed with the remaining portions of the third engagement element 82. Moreover, in the present example, the locking element 130 has a substantially rectangular cross section.

A length of the locking element 130, i.e. an extension of the locking element 130 along the length direction of the connector 56 is chosen such that in a release state of the connector 56, the locking element 130, more precisely a free end of the locking element 130, is located adjacent to the fourth engagement element 84 along the insertion direction D and the length L1 of the connector 56.

Moreover, the length of the locking element 130 is chosen such that, in a connection state of the connector 56, a free end of the locking element 130 is located between the second engagement element 80 and the fourth engagement element 84 along the thickness L3 of the connector 56. In this position, the locking element 128 prevents a movement of the second engagement element 80 and the fourth engagement element 84 towards one another. Moreover, the locking element 128 prevents a deformation of the second engagement element 80 and the fourth engagement element 84 towards one another.

Altogether, if the connector 56 is in the connection state, the second engagement element 80 and the fourth engagement element 84 are supported on one another by the locking element 128 of the first engagement element 78, the locking element 130 of the third engagement element 82 and the head 90a of the second actuation arm 90, when considering a direction extending in parallel to the thickness L3 of the connector 56. This not only prevents the second engagement element 80 and the fourth engagement element 84 from moving towards one another but also prevents undesired plastic or elastic deformations of the second engagement element 80 and the fourth engagement element 84.

It is noted that the locking elements 128, 130 essentially fulfil the same functionality as the holding portions 122. The difference is that, in the present example, the locking elements 128, 130 lock or block a movement of the second engagement element 80 and the fourth engagement element 84 if the connector 56 is in the connection state. Thus, an undesired movement of the second engagement element 80 and the fourth engagement element 84 relative to the carrier 58 and/or an undesired deformation of the second engagement element 80 and the fourth engagement element 84 is not possible due to the locking elements 128, 130. Consequently, the locking elements 128, 130 may also be designated as a holding portions even though they are provided on the first engagement element 78 and the third engagement element 82 respectively, i.e. not on the carrier 58.

A further difference of the connector 56 according to the third embodiment relates to the fact that the first engagement element 78 comprises first securing means 132 which are configured to secure the first engagement element 78 against the third engagement element 82 in a connection state of the connector 56. More precisely, also the third engagement element 82 comprises third securing means 134. The first securing means 132 and the third securing means 134 are configured for engaging one another in a connection state of the connector 56 (see in particular Figures 14, 15, 18, 19, and 23). Thus, the first securing means 132 and the third securing means 134 may as well be designated as interlocking means or interlocking structures.

In the present example, the first securing means 132 comprise two hooks 132a, 132b. The third securing means 134 comprise two openings 134a, 134b. Hook 132a extends through opening 134a and hook 132b extends through opening 134b, wherein the hooks 132a, 132b and the openings 134a, 134b are shaped such that each of the hooks 132a, 132b abuts against a rim of the associated opening 134a, 134b if the connector 56 is in the connection state, thereby blocking a movement of the first engagement element 78 and the third engagement element 82 further away from one another, but allowing a movement of the first engagement element 78 and the third engagement element 82 towards each other.

More generally speaking, the first securing means 132 of the first engagement element 78 at least partially extend through the third engagement element 82, more precisely through the third securing means 134 of the third engagement element 82.

In the connection state of the connector 56, the first securing means 132 and the third securing means 134 prevent undesired plastic or elastic deformations of the first engagement element 78 and the third engagement element 82. Moreover, the first securing means 132 and the third securing means 134 act as a torque support for a torque resulting from the engagement of a workpiece by the first engagement element 78 and the third engagement element 82 and the interaction of the first actuation arm 88 with the first engagement element 78 and the third engagement element 82.

Additionally, a surface 132c on the hook 132a of the first securing means 132 serves as an abutment surface for the head 88a of the first actuation arm 88 in the connection state of the connector 56. By abutting the head 88a against surface 132, the head 88a is in a well-defined position. In particular, the surface 132c hinders the head 88a from being moved too far.

Moreover, the second engagement element 80 comprises second securing means 136 which are configured to secure the second engagement element 80 against the fourth engagement element 84 in a connection state of the connector 56. More precisely, also the fourth engagement element 84 comprises fourth securing means 138. The second securing means 136 and the fourth securing means 138 are configured for engaging one another in a connection state of the connector 56 (see in particular Figures 15, 19, 20, and 22). Thus, the second securing means 136 and the fourth securing means 138 may as well be designated as interlocking means or interlocking structures.

In the present example, the second securing means 136 comprise two hooks 136a, 136b. The fourth securing means 138 also comprise two hooks 138a, 138b. Hook 136a engages hook 138a and hook 136b engages hook 138b if the connector 56 is in the connection state. Moreover, the hooks 136a, 138a are shaped such that hooks 136a, 138a abut against one another if the connector 56 is in the connection state, thereby blocking a movement of the second engagement element 80 and the fourth engagement element 84 further away from one another, but allowing a movement of the second engagement element 80 and the fourth engagement element 84 towards each other. Furthermore, the hooks 136b, 138b are shaped such that hooks 136b, 138b abut against one another if the connector 56 is in the connection state, thereby blocking a movement of the second engagement element 80 and the fourth engagement element 84 further away from one another, but allowing a movement of the second engagement element 80 and the fourth engagement element 84 towards each other.

In the connection state of the connector 56, the second securing means 136 and the fourth securing means 138 prevent undesired deformations of the second engagement element 80 and the fourth engagement element 84. Moreover, the second securing means 136 and the fourth securing means 138 act as a torque support for a torque resulting from the engagement of a workpiece by the second engagement element 80 and the fourth engagement element 84 and the interaction of the second actuation arm 90 with the second engagement element 80 and the fourth engagement element 84.

In order to allow for the movement of the hooks 136a, 136b of the second securing means 136 and the movement of the hooks 138a, 138b of the fourth securing means 138, a total of four recesses 140 is provided on the carrier 58 at positions adjacent to the respective hooks 136a, 136b, 138a, 138b. This allows to build the connector 56 in a compact manner.

It is noted that the designation of the securing means as first, second, third and fourth is done for the ease of explanation only. The terms first, second, third and fourth do not imply any number of securing means.

As has been explained above, the connector 56 combines the advantage of providing a reliable connection between workpieces and the advantage of being configured for being easily withdrawn from the connected workpieces if desired. In other words, the connector 56 has the advantage of being selectively transferable from the connection state into the release state. During this transition, the first engagement 78 and the third engagement element 82 need to be moved towards each other. Similarly, the second engagement element 80 and the fourth engagement element 84 need to be moved towards each other.

This movement is enabled by turning the actuation body 86 appropriately.

Moreover, in the third example, two first guiding surfaces 142a, 142b are provided for guiding a movement of the first engagement element 78 from its position associated with the connection state of the connector 56 into its position associated with the release state of the connector 56 and vice versa. Thereby, one of the first guiding surfaces 142a, 142b is provided at an end of the guide rail 96 and the other one of the first guiding surfaces 142a, 142b is provided at an end of the guide rail 98, i.e. both first guiding surfaces 142a, 142b are provided on the carrier 58 (see in particular Figures 18, 19, and 24). Both first guiding surfaces 142a, 142b are inclined such that the first engagement element 78 is moved or allowed to move towards the third engagement element 82 when moved from a position associated with the connection state of the connector 56 into a position associated with the release state of the connector 56.

Moreover, both first guiding surfaces 142a, 142b are inclined such that the first engagement element 78 is moved and/or allowed to move away from the third engagement element 82 when moved from a position associated with the release state of the connector 56 into a position associated with the connection state of the connector 56.

In order to allow for a well-defined and smooth cooperation with the first guiding surfaces 142a, 142b, the first engagement element 78 comprises two protrusions 143a, 143b which are arranged at opposite ends thereof, wherein protrusion 143a is configured to interact with guiding surface 142a and wherein protrusion 143b is configured to interact with guiding surface 142b. The surfaces of the protrusions 143a, 143b which contact the guiding surfaces 142a, 142b are inclined correspondingly to the guiding surfaces 142a, 142b.

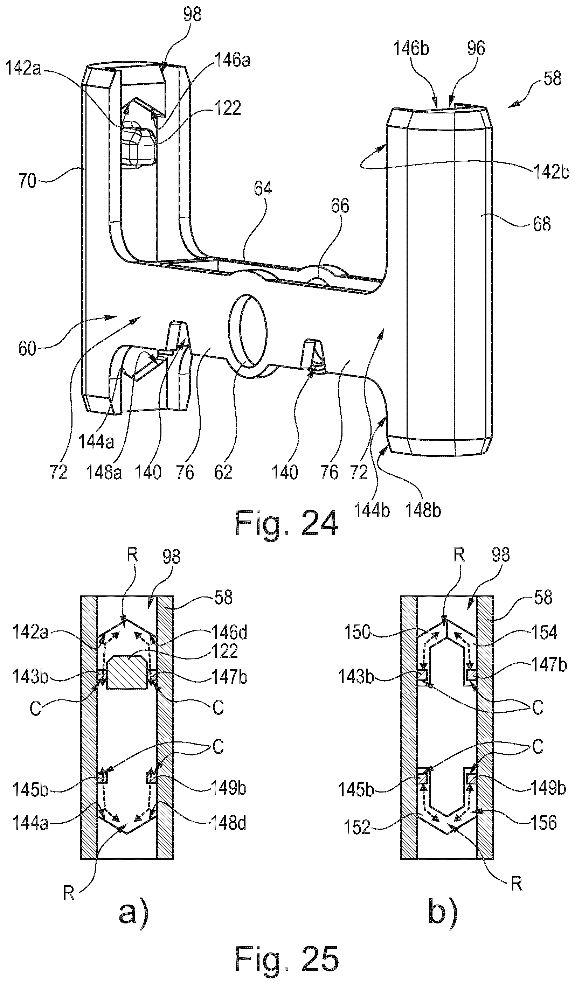

Additionally, in the third example, two second guiding surfaces 144a, 144b are provided for guiding a movement of the second engagement element 80 from its position associated with the connection state of the connector 56 into its position associated with the release state of the connector 56 and vice versa. Thereby, one of the second guiding surfaces 144a, 144b is provided at an end of the guide rail 96 and the other one of the second guiding surfaces 144a, 144b is provided at an end of the guide rail 98, i.e. both second guiding surfaces 144a, 144b are provided on the carrier 58 (see in particular Figure 24). Both second guiding surfaces 144a, 144b are inclined such that the second engagement element 80 is moved or allowed to move towards the fourth engagement element 84 when moved from a position associated with the connection state of the connector 56 into a position associated with the release state of the connector 56.

Moreover, both second guiding surfaces 144a, 144b are inclined such that the second engagement element 80 is moved or allowed to move away from the fourth engagement element 84 when moved from a position associated with the release state of the connector 56 into a position associated with the connection state of the connector 56.

**In** order to allow for a well-defined and smooth cooperation with the second guiding surfaces 144a, 144b, the second engagement element 80 comprises two protrusions 145a, 145b which are arranged at opposite ends thereof, wherein protrusion 145a is configured to interact with guiding surface 144a and wherein protrusion 145b is configured to interact with guiding surface 144b. The surfaces of the protrusions 145a, 145b which contact the guiding surfaces 144a, 144b are inclined correspondingly to the guiding surfaces 144a, 144b.

Furthermore, in the third example, two third guiding surfaces 146a, 146b are provided for guiding a movement of the third engagement element 82 from its position associated with the connection state of the connector 56 into its position associated with the release state of the connector 56 and vice versa. Thereby, one of the third guiding surfaces 146a, 146b is provided at an end of the guide rail 96 and the other one of the third guiding surfaces 146a, 146b is provided at an end of the guide rail 98, i.e. both third guiding surfaces 146a, 146b are provided on the carrier 58 (see in particular Figures 18, 19, and 24). Both third guiding surfaces 146a, 146b are inclined such that the third engagement element 82 is moved or allowed to move towards the first engagement element 78 when moved from a position associated with the connection state of the connector 56 into a position associated with the release state of the connector 56.

Moreover, both third guiding surfaces 146a, 146b are inclined such that the third engagement element 82 is moved or allowed to move towards the fourth engagement element 84 when moved from a position associated with the release state of the connector 56 into a position associated with the connection state of the connector 56.

**In** order to allow for a well-defined and smooth cooperation with the third guiding surfaces 146a, 146b, the third engagement element 82 comprises two protrusions 147a, 147b which are arranged at opposite ends thereof, wherein protrusion 147a is configured to interact with guiding surface 146a and wherein protrusion 147b is configured to interact with guiding surface 146b. The surfaces of the protrusions 147a, 147b which contact the guiding surfaces 146a, 146b are inclined correspondingly to the guiding surfaces 146a, 146b.

Also, in the third example, two fourth guiding surfaces 148a, 148b are provided for guiding a movement of the fourth engagement element 84 from its position associated with the connection state of the connector 56 into its position associated with the release state of the connector 56 and vice versa. Thereby, one of the fourth guiding surfaces 148a, 148b is provided at an end of the guide rail 96 and the other one of the fourth guiding surfaces 148a, 148b is provided at an end of the guide rail 98, i.e. both fourth guiding surfaces 148a, 148b are provided on the carrier 58 (see in particular Figure 24). Both fourth guiding surfaces 148a, 148b are inclined such that the fourth engagement element 84 is moved or allowed to move towards the second engagement element 80 when moved from a position associated with the connection state of the connector 56 into a position associated with the release state of the connector 56.

Moreover, both fourth guiding surfaces 148a, 148b are inclined such that the fourth engagement element 84 is moved towards the third engagement element 82 and away from the second engagement element 80 when moved from a position associated with the release state of the connector 56 into a position associated with the connection state of the connector 56.

**In** order to allow for a well-defined and smooth cooperation with the third guiding surfaces 148a, 148b, the fourth engagement element 84 comprises two protrusions 149a, 149b which are arranged at opposite ends thereof, wherein protrusion 149a is configured to interact with guiding surface 148a and wherein protrusion 149b is configured to interact with guiding surface 148b. The surfaces of the protrusions 149a, 149b which contact the guiding surfaces 148a, 148b are inclined correspondingly to the guiding surfaces 148a, 148b.

As far as the method for operating the connector 56 according to the third embodiment is concerned, essentially the same differences apply that have already been explained with respect to the structural features of the connector 56 according to the third embodiment.

This means, that, when operating the connector 56 according to the third example, the second engagement element 80 and the fourth engagement element 84 may be locked using the locking elements 128, 130, if the connector 56 is in or moved into the connection state.

Similarly, a movement of the second engagement element 80 and the fourth engagement element 84 may be enabled by withdrawing the locking elements 128, 130, if the connector is in or moved into the release state.

Furthermore, when operating the connector 56 according to the third embodiment, the first engagement element 78 and the third engagement element 82 may be secured on one another using the first securing means 132 and the third securing means 134, if the connector 56 is in or moved into the connection state. In other words, the first engagement element 78 and the third engagement element 82 may be interlocked when the connector 56 is in the connection state.

Similarly, the second engagement element 80 and the fourth engagement element 84 may be secured on one another using the second securing means 136 and the fourth securing means 138, if the connector 56 is in or moved into the connection state. In other words, the second engagement element 80 and the fourth engagement element 84 may be interlocked when the connector 56 is in the connection state.

Furthermore, as has already been explained above, the first engagement element 78 may be guided by the first guiding surfaces 142a, 142b, when moving from a position associated with the connection state of the connector 56 into a position associated with the release state of the connector 56. Thus, when the connector 56 is in the release state, the first engagement element 78 may be interlocked with the carrier 58 to assume a defined position that allows withdrawing the connector 56 from the first coupling groove 20 comprising the first undercut 26 of the first workpiece 12.

Moreover, the second engagement element 80 may be guided by the second guiding surfaces 144a, 144b, when moving from a position associated with the connection state of the connector 56 into a position associated with the release state of the connector 56. Thus, when the connector 56 is in the release state, the second engagement element 80 may be interlocked with the carrier 58 to assume a defined position that allows withdrawing the connector 56 from the second coupling groove 36 comprising the second undercut 42 of the second workpiece 14.

Furthermore, the third engagement element 82 may be guided by the third guiding surfaces 146a, 146b, when moving from a position associated with the connection state of the connector 56 into a position associated with the release state of the connector 56. Thus, when the connector 56 is in the release state, the third engagement element 82 may be interlocked with the carrier 58 to assume a defined position that allows withdrawing the connector 56 from the first coupling groove 20 comprising the third undercut 32 of a first workpiece 12.

Additionally, the fourth engagement element 84 may be guided by the fourth guiding surfaces 148a, 148b, when moving from a position associated with the connection state of the connector 56 into a position associated with the release state of the connector 56 and a position associated with the connection state of the connector 56. Thus, when the connector 56 is in the release state, the fourth engagement element 84 may be interlocked with the carrier 58 to assume a defined position that allows withdrawing the connector 56 from the second coupling groove 36 comprising the fourth undercut 48 of a second workpiece 14.

When moving between a position associated with a release state of the connector 56 and a position associated with a connection state of the connector 56, each of the engagement elements 78, 80, 82, 84, more precisely protrusions 143a, 143b, 145a, 145b, 147a, 147b, 149a, 149b thereof, is guided by associated guiding surfaces 142a, 142b, 144a, 144b, 146a, 146b, 148a, 148b. The first engagement element 78 and the third engagement element 82 may be held by the holding portions 122 when in a position associated with the connection state of the connector 56.

This is schematically illustrated in Figure 25 a) wherein the positions of engagement elements 78, 80, 82, 84, more precisely protrusions 143a, 143b, 145a, 145b, 147a, 147b, 149a, 149b thereof, associated with the connection state of the connector 56 are marked with C and the positions of engagement elements 78, 80, 82, 84, more precisely protrusions 143a, 143b, 145a, 145b, 147a, 147b, 149a, 149b thereof, associated with the release state of the connector 56 are marked with R. A movement of each of the engagement elements 78, 80, 82, 84 is illustrated by dotted arrows.

This configuration makes sure that all of the engagement elements 78, 80, 82, 84 assume the desired position associated with the connection state of the connector 56 and the release state of the connector 56 and that the engagement elements 78, 80, 82, 84 are reliably transitioned between these positions.

It is noted that the same functionality may be realized using guiding slots 150, 152, 154, 156 for each of the engagement elements 78, 80, 82, 84, wherein each of the protrusions 143a, 143b, 145a, 145b, 147a, 147b, 149a, 149b of the engagement elements 78, 80, 82, 84 is at least partially received in an associated guiding slot 150, 152, 154, 156, wherein the guiding slots 150, 152, 154, 156 are arranged in guide rail 98.

More precisely, the protrusion 143b of the first engagement element 78 is received in guiding slot 150, the protrusion 145b of the second engagement element 80 is received in guiding slot 152, the protrusion 147b of the third engagement element 82 is received in guiding slot 154 and the protrusion 149b of the fourth engagement element 84 is received in guiding slot 156.

This alternative is illustrated in Figure 25 b).

The same applies for the protrusions 143a, 145a, 147a, 149a which are arranged to cooperate with guide rail 96.

It is noted that in the alternative of Figure 25 b), the protrusions 143a, 143b, 145a, 145b, 147a, 147b, 149a, 149b may have the same shape as in the previous example. However, it is also possible that the protrusions 143a, 143b, 145a, 145b, 147a, 147b, 149a, 149b have a circular cross section.

### List of reference signs

- 10: assembly
- 12: first workpiece
- 14: second workpiece
- 16: first abutment surface
- 18: second abutment surface
- 20: first coupling groove
- 22: groove opening of the first coupling groove
- 24: groove depth direction of the first coupling groove
- 26: first undercut of the first coupling groove
- 28: groove base of the first coupling groove
- 30: groove depth direction of the transverse groove forming the first undercut
- 32: third undercut of the first coupling groove
- 34: groove depth direction of the transverse groove forming the third undercut
- 36: second coupling groove
- 38: groove opening of the second coupling groove
- 40: groove depth direction of the second coupling groove
- 42: second undercut of the second coupling groove
- 44: groove base of the second coupling groove
- 46: groove depth direction of the transverse groove forming the second undercut
- 48: fourth undercut of the second coupling groove
- 50: groove depth direction of the transverse groove forming the fourth undercut
- 52: access channel
- 54: outer surface
- 56: connector
- 58: carrier
- 60: first wall element of the carrier
- 62: first bearing opening of the carrier
- 64: second wall element of the carrier
- 66: second bearing opening of the carrier
- 68: connecting section of the carrier
- 70: connecting section of the carrier
- 72: T-shaped portion
- 74: T-shaped portion
- 76: leg element
- 78: first engagement element
- 78a: engagement rib
- 80: second engagement element
- 80a: engagement rib
- 82: third engagement element
- 82a: engagement rib
- 84: fourth engagement element
- 84a: engagement rib
- 86: actuation body
- 88: first actuation arm
- 88a: head of the first actuation arm
- 90: second actuation arm
- 90a: head of the second actuation
- 92: central portion of the actuation body
- 94: actuation interface
- 96: guide rail
- 98: guide rail
- 102: first primary cam mechanism
- 102a: cam surface
- 102b: mating surface
- 104: second primary cam mechanism
- 104a: cam surface
- 104b: mating surface
- 106: third primary cam mechanism
- 106a: cam surface
- 106b: mating surface
- 108: fourth primary cam mechanism
- 108a: cam surface
- 108b: mating surface
- 110: first secondary cam mechanism
- 110a: cam surface
- 110b: mating surface
- 112: second secondary cam mechanism
- 112a: cam surface
- 112b: mating surface
- 114: third secondary cam mechanism
- 114a: cam surface
- 114b: mating surface
- 116: fourth secondary cam mechanism
- 116a: cam surface
- 116b: mating surface
- 118: first abutment portion
- 120: second abutment portion
- 122: holding portion
- 124: connection element
- 126: recess
- 128: locking element of the first engagement element
- 130: locking element of the third engagement element
- 132: first securing means
- 132a: hook
- 132b: hook
- 132c: surface
- 134: third securing means
- 134a: opening
- 134b: opening
- 136: second securing means
- 136a: hook
- 136b: hook
- 138: fourth securing means
- 138a: hook
- 138b: hook
- 140: recess
- 142a: first guiding surface
- 142b: first guiding surface
- 143a: protrusion of the first engagement element
- 143b: protrusion of the first engagement element
- 144a: second guiding surface
- 144b: second guiding surface
- 145a: protrusion of the second engagement element
- 145b: protrusion of the second engagement element
- 146a: third guiding surface
- 146b: third guiding surface
- 147a: protrusion of the third engagement element
- 147b: protrusion of the third engagement element
- 148a: fourth guiding surface
- 148b: fourth guiding surface
- 149a: protrusion of the fourth engagement element
- 149b: protrusion of the fourth engagement element
- 150: guiding slot
- 152: guiding slot
- 154: guiding slot
- 156: guiding slot

- A: axis of rotation of the actuation body
- A1: length of the first actuation arm
- A2: length of the second actuation arm
- D: insertion direction
- L1: length of the connector
- L2: width of the connector
- L3: thickness of the connector
- T1: first distance
- T2: second distance

## Claims

1. Connector (56) for mechanically connecting a first workpiece (12) and a second workpiece (14), wherein the first workpiece (12) comprises at least one first coupling groove (20) comprising a first undercut (26) effective along a groove depth direction (24), and wherein the second workpiece (14) comprises at least one second coupling groove (36) comprising a second undercut (42) effective along a groove depth direction (40),
wherein the connector (56) is plate-shaped or flat bar-shaped and comprises:
a first engagement element (78) for engaging the first undercut (26),
a second engagement element (80) for engaging the second undercut (42), and
an actuation body (86) for selectively bringing the connector (56) into a connection state in which the first engagement element (78) is positioned to engage the first undercut (26) and the second engagement element (80) is positioned to engage the second undercut (42), and for selectively bringing the connector (56) into a release state in which the first engagement element (78) is configured to be withdrawn from the first undercut (26) and the second engagement element (80) is configured to be withdrawn from the second undercut (42),
wherein the first engagement element (78) and the second engagement element (80) are arranged at opposite ends of the connector (56) with respect to an insertion direction (D) of the connector (56),
wherein the first engagement element (78) and the second engagement element (80) are movably coupled to the actuation body (86), and
wherein an actuation interface (94) is provided on the actuation body (86), the actuation interface (94) arranged eccentrically along the insertion direction (D).

2. Connector (56) according to claim 1, wherein the first engagement element (78) and the second engagement element (80) have different lengths along the insertion direction (D).

3. Connector (56) according to any one of the preceding claims,
wherein the first engagement element (78) travels over a first distance (T1) when moving between a position associated with the connection state and a position associated with the release state,
wherein the second engagement element (80) travels over a second distance (T2) when moving between a position associated with the connection state and a position associated with the release state, and
wherein the first distance (T1) and the second distance (T2) are different.

4. Connector (56) according to any one of the preceding claims, wherein the connector (56) has a length (L1) measured along the insertion direction (D), a width (L2) measured transversely to the insertion direction (D) and a thickness (L3) measured transversely to the insertion direction (D), wherein the thickness (L3) is smaller than the width (L2), and wherein a ratio of the width (L2) to the length (L3) is 1 to 3, preferably 1.4 to 2.

5. Connector (56) according to any one of the preceding claims, wherein the actuation body (86) is rotatably supported on the first engagement element (78) or on the second engagement element (80) or on the carrier (58) such that the actuation body (86) is rotatable about an axis (A) of rotation.

6. Connector (56) according to any one of the preceding claims, wherein at least one of the first engagement element (78) and the second engagement element (80) is movably coupled to the actuation body (86) via a transmission mechanism.

7. Connector (56) according to claim 6, wherein the transmission mechanism comprises a cam mechanism (102, 104, 106, 108, 110, 112, 114, 116).

8. Connector (56) according to any one of the preceding claims, wherein the actuation body (86) comprises at least one actuation arm (88, 90) extending from a central portion (92) of the actuation body (86).

9. Connector (56) according to claims 7 and 8, wherein a cam surface (102a, 104a, 106a, 108a, 110a, 112a, 114a, 116a) of the cam mechanism (102, 104, 106, 108, 110, 112, 114, 116) is provided at a free end of the at least one actuation arm (88, 90).

10. Connector (56) according to claim 8 or 9, wherein the actuation body (86) comprises two actuation arms (88, 90), wherein one out of the two actuation arms (88, 90) is associated with the first engagement element (78) and another one of the two actuation arms (88, 90) is associated with the second engagement element (80), and wherein the two actuation arms (88, 90) differ in length.

11. Connector (56) according to any one of the preceding claims, wherein the actuation body (86) comprises at least one abutment portion (118, 120) for supporting the first engagement element (78) if the connector (56) is in the release state and/or for supporting the second engagement element (80) if the connector (56) is in the release state.

12. Connector (56) according to claim 11 and one of claims 8 to 10, wherein the abutment portion (118, 120) is arranged at the free end of the actuation arm (88, 90) or on a central portion (92) of the actuation arm (88, 90).

13. Assembly (10), comprising
a first workpiece (12) comprising at least one first coupling groove (20) having a groove opening (22) positioned in a first abutment surface (16) of the first workpiece (12) and comprising a first undercut (26) effective along a groove depth direction (24),
a second workpiece (14) comprising at least one second coupling groove (36) having a groove opening (38) positioned in a second abutment surface (18) of the second workpiece (14) and comprising a second undercut (42) effective along a groove depth direction (40), and
a connector (56) according to any one of the preceding claims,
wherein the connector (56) is arranged partially in the first coupling groove (20) and partially in the second coupling groove (36), wherein the first engagement element (78) of the connector (56) engages the first undercut (26) and wherein the second engagement element (80) of the connector (56) engages the second undercut (42), and wherein the first abutment surface (16) and the second abutment surface (18) contact each other.

14. Assembly of claim 13, wherein an access channel (52) for a tool is provided on the first workpiece (12) and/or on the second workpiece (14), wherein the access channel (52) extends from an outer surface (54) of the respective first workpiece (12) or second workpiece (14) into the first coupling groove (20) and/or into the second coupling groove (36).

15. Method for operating a connector (56), in particular a connector (56) according to any one of claims 1 to 12, the method comprising
- transferring a connector (56) from a release state into a connection state, wherein a first engagement element (78) of the connector (56) travels over a first distance (T1) when moving from a position associated with the release state into a position associated with the connection state, wherein a second engagement element (80) of the connector (56) travels over a second distance (T2) when moving from a position associated with the release state into a position associated with the connection state, and wherein the first distance (T1) and the second distance (T2) are different or
- transferring the connector (56) from a connection state into a release state, wherein a first engagement element (78) of the connector (56) travels over a first distance (T1) when moving from a position associated with the connection state into a position associated with the release state, wherein a second engagement element (80) of the connector travels over a second distance (T2) when moving from a position associated with the connection state into a position associated with the release state, and wherein the first distance (T1) and the second distance (T2) are different.
